# EUROPEAN PATENT APPLICATION

(11) **EP 3 604 887 A1**
(43) Date of publication of application: **05.02.2020**
(21) Application number: 18777435.1
(22) Date of filing: 28.03.2018
(51) Int. Cl.: F16L 59/08, B32B 7/02, B32B 27/00, B32B 27/40, C09J 7/40

(54) **HEAT-SHIELDING HEAT INSULATING SUBSTRATE**

(30) Priority: 30.03.2017 JP 2017066616; 27.03.2018 JP 2018059495
(71) Applicant: Nitto Denko Corporation, Ibaraki-shi, Osaka 567-8680 (JP)
(72) Inventor: WATANABE Masahiko, Ibaraki-shi Osaka 567-8680 (JP); SHIMAZAKI Yuta, Ibaraki-shi Osaka 567-8680 (JP); WATANABE Taichi, Ibaraki-shi Osaka 567-8680 (JP); YAMAMOTO Yusuke, Ibaraki-shi Osaka 567-8680 (JP); KONTANI Tomohiro, Ibaraki-shi Osaka 567-8680 (JP)
(74) Representative: Grünecker Patent- und Rechtsanwälte PartG mbB
(86) International application number: PCT/JP2018/012648
(87) International publication number: WO 2018/181427

(57) **Abstract**

Provided is a heat-shielding heat insulating substrate that is excellent not only in scratch resistance on the surface of a protective film but also in scratch resistance of an outermost layer after the peeling of the protective film. The heat-shielding heat insulating substrate of the present invention is a heat-shielding heat insulating substrate including a transparent substrate layer and an infrared reflection layer, the heat-shielding heat insulating substrate including: a protective topcoat layer arranged on a side of the infrared reflection layer opposite to the transparent substrate layer; and a protective film arranged on a surface of the protective topcoat layer opposite to the infrared reflection layer, wherein a 180° peel strength of the protective film to the protective topcoat layer under an environment having a temperature of 23±1°C and a humidity of 50±5%RH is from 0.01 N/50 mm to 0.40 N/50 mm, and wherein a 180° peel strength of the protective film to the protective topcoat layer after storage of the heat-shielding heat insulating substrate under an environment having a temperature of 80±1°C for 10 days is from 0.01 N/50 mm to 1.0 N/50 mm.

## Description

### Technical Field

The present invention relates to a heat-shielding heat insulating substrate.

### Background Art

A heat-shielding heat insulating substrate is a substrate having both of a heat-shielding function and a heat-insulating function. For example, in the case where such heat-shielding heat insulating substrate is bonded to a window glass or in the case of a form in which the substrate is integrated with the window glass, the inflow of solar radiation heat (a near-infrared ray) from the outside of a room to the inside of the room, and the outflow of heater heat (a far-infrared ray) from the inside of the room to the outside of the room can be suppressed by an infrared reflection function. Accordingly, an improvement in comfortability in the room and an improvement in energy-saving effect can be achieved throughout the year.

In recent years, a heat-shielding heat insulating film including a base material layer and an infrared reflection layer has been proposed as such heat-shielding heat insulating substrate (Patent Literatures 1 and 2). The infrared reflection layer has, for example, a configuration including metal oxide layers on both sides of a metal layer, and hence can achieve both of an improvement in heat-shielding property by the reflection of a near-infrared ray and an improvement in heat-insulating property by the reflection of a far-infrared ray.

The outermost surface of the heat-shielding heat insulating substrate may be rubbed in, for example, the operation of bonding the substrate to a window glass, and there is a problem in that such rubbing serves as a cause for a flaw in the outermost surface.

In view of the foregoing, an attention has been paid to the arrangement of a protective film on the outermost surface side of the heat-shielding heat insulating substrate. When a protective film excellent in scratch resistance is adopted as such protective film, flawing caused by rubbing from above the surface of the protective film can be suppressed.

However, after the heat-shielding heat insulating substrate has been applied to, for example, the interior and exterior of a building, the protective film is finally peeled, and hence a layer below the protective film (layer having bonded thereto the protective film) serves as the outermost layer. There is a problem in that rubbing during daily use of the substrate serves as a cause for a flaw in such outermost layer (layer below the protective layer) as well, and hence the layer has been strongly required to be excellent in scratch resistance.

In view of the foregoing, the inventors of the present invention have made various investigations on the scratch resistance of the outermost layer after the peeling of such protective film (layer below the protective film), and as a result, have found that the magnitudes of the peel strengths of the protective film under various conditions affect the scratch resistance of the outermost layer after the peeling of the protective film (layer below the protective film). Thus, the inventors have found that the adoption of a protective film having appropriate peel strengths under various conditions can not only improve scratch resistance on the surface of the protective film but also improve the scratch resistance of the outermost layer after the peeling of the protective film (layer below the protective film).

### Citation List

### Patent Literature

[PTL 1] JP 2016-93892 A
[PTL 2] JP 2016-94012 A

### Summary of Invention

### Technical Problem

An object of the present invention is to provide a heat-shielding heat insulating substrate that is excellent not only in scratch resistance on the surface of a protective film but also in scratch resistance of the outermost layer after the peeling of the protective film.

### Solution to Problem

According to one embodiment of the present invention, there is provided a heat-shielding heat insulating substrate including a transparent substrate layer and an infrared reflection layer, the heat-shielding heat insulating substrate including: a protective topcoat layer arranged on a side of the infrared reflection layer opposite to the transparent substrate layer; and a protective film arranged on a surface of the protective topcoat layer opposite to the infrared reflection layer, wherein a 180° peel strength of the protective film to the protective topcoat layer under an environment having a temperature of 23±1°C and a humidity of 50±5%RH is from 0.01 N/50 mm to 0.40 N/50 mm, and wherein a 180° peel strength of the protective film to the protective topcoat layer after storage of the heat-shielding heat insulating substrate under an environment having a temperature of 80±1°C for 10 days is from 0.01 N/50 mm to 1.0 N/50 mm.

In one embodiment, the transparent substrate layer is a transparent film, and the 180° peel strength of the protective film to the protective topcoat layer under the environment having a temperature of 23±1°C and a humidity of 50±5%RH is from 0.01 N/50 mm to 0.14 N/50 mm.

In one embodiment, the transparent substrate layer is a transparent film, and the 180° peel strength of the protective film to the protective topcoat layer under the environment having a temperature of 23±1°C and a humidity of 50±5%RH is from 0.03 N/50 mm to 0.10 N/50 mm.

In one embodiment, the transparent substrate layer is a transparent film, and the 180° peel strength of the protective film to the protective topcoat layer after the storage under the environment having a temperature of 80±1°C for 10 days is from 0.01 N/50 mm to 0.30 N/50 mm.

In one embodiment, the transparent substrate layer is a transparent film, and the 180° peel strength of the protective film to the protective topcoat layer after the storage under the environment having a temperature of 80±1°C for 10 days is from 0.08 N/50 mm to 0.16 N/50 mm.

In one embodiment, when a water contact angle of the surface of the protective topcoat layer after peeling of the protective film from the surface of the protective topcoat layer after storage of the heat-shielding heat insulating substrate under an environment having a temperature of 50±1°C for 20 days is represented by α degrees, and a water contact angle of the surface of the protective topcoat layer after peeling of the protective film from the surface of the protective topcoat layer under the environment having a temperature of 23±1°C and a humidity of 50±5%RH before the storage is represented by β degrees, (α-β) is from -15 to +9.

In one embodiment, the (α-β) is from -1 to +9.

In one embodiment, when a water contact angle of a surface of a protective topcoat layer of a standard substrate under the environment having a temperature of 23±1°C and a humidity of 50±5%RH is represented by γ degrees, and a water contact angle of the surface of the protective topcoat layer of the standard substrate under an environment having a humidity of 50±5%RH when the protective film is bonded to the standard substrate at room temperature, and the resultant is left to stand at room temperature for 24 hours, followed by peeling of the protective film from the surface of the protective topcoat layer is represented by β' degrees, (β'-γ) is from -15 to +3.

In one embodiment, the (β'-γ) is from -9 to +1.

In one embodiment, the protective film includes a base material film and a pressure-sensitive adhesive layer.

In one embodiment, a pressure-sensitive adhesive forming the pressure-sensitive adhesive layer is formed of a pressure-sensitive adhesive composition, and the pressure-sensitive adhesive composition contains a base polymer.

In one embodiment, the base polymer is at least one kind selected from a urethane-based resin, an acrylic resin, a rubber-based resin, and a silicone-based resin.

In one embodiment, the urethane-based resin is a urethane-based resin formed of a composition containing a polyol (A) and a polyfunctional isocyanate compound (B).

In one embodiment, the urethane-based resin is a urethane-based resin formed of a composition containing a urethane prepolymer (C) and a polyfunctional isocyanate compound (B).

In one embodiment, the protective topcoat layer has a thickness of from 5 nm to 500 nm.

In one embodiment, the protective film has a thickness of from 10 µm to 150 µm.

### Advantageous Effects of Invention

According to the present invention, the heat-shielding heat insulating substrate that is excellent not only in scratch resistance on the surface of a protective film but also in scratch resistance of the outermost layer after the peeling of the protective film can be provided.

### Brief Description of Drawings

FIG. 1 is a schematic sectional view for illustrating a heat-shielding heat insulating substrate according to one embodiment of the present invention.
FIG. 2 is a schematic sectional view for illustrating the heat-shielding heat insulating substrate according to one embodiment of the present invention.
FIG. 3 is a sectional view for schematically illustrating an example of the usage mode of the heat-shielding heat insulating substrate of the present invention.

### Description of Embodiments

### <<1. Summary of Heat-shielding Heat Insulating Substrate>>

A heat-shielding heat insulating substrate of the present invention includes a transparent substrate layer and an infrared reflection layer, includes a protective topcoat layer on the side of the infrared reflection layer opposite to the transparent substrate layer, and includes a protective film on the surface of the protective topcoat layer opposite to the infrared reflection layer. The heat-shielding heat insulating substrate of the present invention can be excellent in scratch resistance by having such configuration.

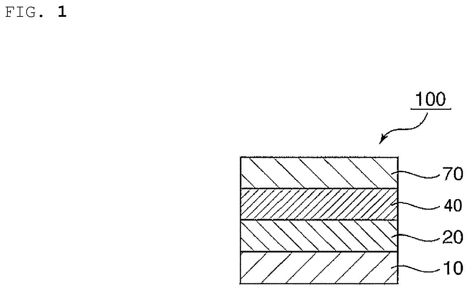

FIG. **1** is a schematic sectional view for illustrating the heat-shielding heat insulating substrate according to one embodiment of the present invention. InFIG. **1**, a heat-shielding heat insulating substrate **100** includes a transparent substrate layer **10**, an infrared reflection layer **20**, a protective topcoat layer **40**, and a protective film **70**.

The heat-shielding heat insulating substrate of the present invention may include any appropriate other layer at any one of the following positions as required: on the side of the transparent substrate layer opposite to the infrared reflection layer; between the transparent substrate layer and the infrared reflection layer; between the infrared reflection layer and the protective topcoat layer; and on the side of the protective film **70** opposite to the protective topcoat layer. The number of such other layers may be one, or may be two or more. In addition, the number of kinds of such other layers may be only one, or may be two or more.

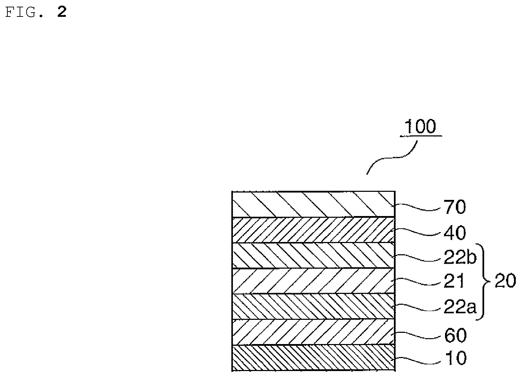

FIG. **2** is a schematic sectional view for illustrating the heat-shielding heat insulating substrate according to one embodiment of the present invention. In FIG. **2**, a heat-shielding heat insulating substrate **100** includes a transparent substrate layer **10**, an undercoat layer **60**, an infrared reflection layer **20**, a protective topcoat layer **40**, and a protective film **70**. In FIG. **2**, the infrared reflection layer **20** is formed of three layers, that is, a first metal oxide layer **22a**, a metal layer **21**, and a second metal oxide layer **22b**.

The heat-shielding heat insulating substrate of the present invention may include a pressure-sensitive adhesive layer on the side of the transparent substrate layer opposite to the infrared reflection layer. Further, a separator film may be arranged on the surface of such pressure-sensitive adhesive layer.

In the heat-shielding heat insulating substrate of the present invention, the 180° peel strength of the protective film to the protective topcoat layer under an environment having a temperature of 23±1°C and a humidity of 50±5%RH is preferably from 0.01 N/50 mm to 0.40 N/50 mm, more preferably from 0.01 N/50 mm to 0.35 N/50 mm, still more preferably from 0.01 N/50 mm to 0.30 N/50 mm, particularly preferably from 0.01 N/50 mm to 0.25 N/50 mm, most preferably from 0.01 N/50 mm to 0.22 N/50 mm. When such 180° peel strength falls within the range, the protective film excellent in suppression of flawing can be easily peeled with satisfactory workability, and the scratch resistance of the protective topcoat layer after the peeling of the protective film can be excellent. When such 180° peel strength is excessively low, such an inconvenience as described below may occur: when the substrate is turned into a roll body, the protective film floats . When such 180° peel strength is excessively high, the protective topcoat layer may break at the time of the peeling of the protective film.

In the heat-shielding heat insulating substrate of the present invention, when the transparent substrate layer is a transparent film, the 180° peel strength of the protective film to the protective topcoat layer under an environment having a temperature of 23±1°C and a humidity of 50±5%RH is preferably from 0.01 N/50 mm to 0.14 N/50 mm, more preferably from 0.01 N/50 mm to 0.13 N/50 mm, still more preferably from 0.02 N/50 mm to 0.12 N/50 mm, particularly preferably from 0.02 N/50 mm to 0.11 N/50 mm, most preferably from 0.03 N/50 mm to 0.10 N/50 mm. When such 180° peel strength falls within the range, the protective film excellent in suppression of flawing can be easily peeled with satisfactory workability, and the scratch resistance of the protective topcoat layer after the peeling of the protective film can be excellent. When such 180° peel strength is excessively low, such an inconvenience as described below may occur: when the substrate is turned into a roll body, the protective film floats. When such 180° peel strength is excessively high, the protective topcoat layer or the like may break at the time of the peeling of the protective film.

The temperature (23±1°C) serving as a condition for the measurement of the 180° peel strength of the protective film to the protective topcoat layer ispreferably23±0.8°C, more preferably 23±0.5°C, still more preferably 23±0.2°C, particularly preferably 23°C.

The humidity (50±5%RH) serving as a condition for the measurement of the 180° peel strength of the protective film to the protective topcoat layer is preferably 50±4%RH, more preferably 50±3%RH, still more preferably 50±2%RH, particularly preferably 50±1%RH, most preferably 50%RH.

In the heat-shielding heat insulating substrate of the present invention, the 180° peel strength of the protective film to the protective topcoat layer after the storage of the substrate under an environment having a temperature of 50±1°C for 20 days is preferably from 0.01 N/50 mm to 0.40 N/50 mm, more preferably from 0.01 N/50 mm to 0.35 N/50 mm, still more preferably from 0.01 N/50 mm to 0.30 N/50 mm, particularly preferably from 0.01 N/50 mm to 0.25 N/50 mm, most preferably from 0.01 N/50 mm to 0.22 N/50 mm. When such 180° peel strength falls within the range, the protective film excellent in suppression of flawing can be easily peeled with satisfactory workability even after the lapse of a predetermined time period, and the scratch resistance of the protective topcoat layer after the peeling of the protective film can be excellent. When such 180° peel strength is excessively low, such an inconvenience as described below may occur: when the substrate is turned into a roll body, the protective film floats after the lapse of a predetermined time period. When such 180° peel strength is excessively high, the protective topcoat layer may break at the time of the peeling of the protective film after the lapse of a predetermined time period.

In the heat-shielding heat insulating substrate of the present invention, when the transparent substrate layer is a transparent film, the 180° peel strength of the protective film to the protective topcoat layer after the storage of the substrate under an environment having a temperature of 50±1°C for 20 days is preferably from 0.01 N/50 mm to 0.14 N/50 mm, more preferably from 0.01 N/50 mm to 0.13 N/50 mm, still more preferably from 0.02 N/50 mm to 0.12 N/50 mm, particularly preferably from 0.02 N/50 mm to 0.11 N/50 mm, most preferably from 0.03 N/50 mm to 0.10 N/50 mm. When such 180° peel strength falls within the range, the protective film excellent in suppression of flawing can be easily peeled with satisfactory workability, and the scratch resistance of the protective topcoat layer after the peeling of the protective film can be excellent. When such 180° peel strength is excessively low, such an inconvenience as described below may occur: when the substrate is turned into a roll body, the protective film floats . When such 180° peel strength is excessively high, the protective topcoat layer may break at the time of the peeling of the protective film.

The temperature (50±1°C) serving as a condition for the measurement of the 180° peel strength of the protective film to the protective topcoat layer ispreferably50±0.8°C, more preferably 50±0.5°C, still more preferably 50±0.2°C, particularly preferably 50°C.

In the heat-shielding heat insulating substrate of the present invention, the 180° peel strength of the protective film to the protective topcoat layer after the storage of the substrate under an environment having a temperature of 80±1°C for 10 days is preferably from 0.01 N/50 mm to 1.0 N/50 mm, more preferably from 0.01 N/50 mm to 0.98 N/50 mm, still more preferably from 0.01 N/50 mm to 0.80 N/50 mm, still more preferably from 0.01 N/50 mm to 0.60 N/50 mm, still more preferably from 0.01 N/50 mm to 0.40 N/50 mm, still more preferably from 0.01 N/50 mm to 0.35 N/50 mm, still more preferably from 0.01 N/50 mm to 0.30 N/50 mm, particularly preferably from 0.01 N/50 mm to 0.25 N/50 mm, most preferably from 0.01 N/50 mm to 0.20 N/50 mm. When such 180° peel strength falls within the range, the protective film excellent in suppression of flawing can be easily peeled with satisfactory workability even after the lapse of a predetermined time period, and the scratch resistance of the protective topcoat layer after the peeling of the protective film can be excellent. When such 180° peel strength is excessively low, such an inconvenience as described below may occur : when the substrate is turned into a roll body, the protective film floats after the lapse of a predetermined time period. When such 180° peel strength is excessively high, the protective topcoat layer may break at the time of the peeling of the protective film after the lapse of a predetermined time period.

In the heat-shielding heat insulating substrate of the present invention, when the transparent substrate layer is a transparent film, the 180° peel strength of the protective film to the protective topcoat layer after the storage of the substrate under an environment having a temperature of 80±1°C for 10 days is preferably from 0.01 N/50 mm to 0.40 N/50 mm, more preferably from 0.03 N/50 mm to 0.25 N/50 mm, still more preferably from 0.05 N/50 mm to 0.20 N/50 mm, particularly preferably from 0.07 N/50 mm to 0.18 N/50 mm, most preferably from 0.08 N/50 mm to 0.16 N/50 mm. When such 180° peel strength falls within the range, the protective film excellent in suppression of flawing can be easily peeled with satisfactory workability, and the scratch resistance of the protective topcoat layer after the peeling of the protective film can be excellent. When such 180° peel strength is excessively low, such an inconvenience as described below may occur: when the substrate is turned into a roll body, the protective film floats . When such 180° peel strength is excessively high, the protective topcoat layer may break at the time of the peeling of the protective film.

The temperature (80±1°C) serving as a condition for the measurement of the 180° peel strength of the protective film to the protective topcoat layer is preferably 80±0.8°C, more preferably 80±0.5°C, still more preferably 80±0.2°C, particularly preferably 80°C.

In the heat-shielding heat insulating substrate of the present invention, when the water contact angle of the surface of the protective topcoat layer after the peeling of the protective film from the surface of the protective topcoat layer after the storage of the substrate under an environment having a temperature of 50±1°C for 20 days is represented by α degrees, and the water contact angle of the surface of the protective topcoat layer after the peeling of the protective film from the surface of the protective topcoat layer under the environment having a temperature of 23±1°C and a humidity of 50±5%RH before the storage is represented by β degrees, (α-β) is preferably from -15 to +9, more preferably from -7 to +9, still more preferably from -1 to +9. When the (α-β) falls within the range, even in the case where the protective film is bonded to the surface of the protective topcoat layer for a predetermined time period, variations in characteristics of the protective topcoat layer at the time of the peeling can be small. In addition, when the (α-β) falls within the range, even in the case where the protective film is bonded thereto for a predetermined time period, the protective film excellent in suppression of flawing can be easily peeled with satisfactory workability, and the scratch resistance of the protective topcoat layer after the peeling of the protective film can be excellent. When the (α-β) deviates from the range, in the protective topcoat layer at the time of the peeling, a fingerprint-wiping property may reduce, or a water droplet formed by condensation or the like may be liable to drip. In addition, when the (α-β) deviates from the range, the scratch resistance of the protective topcoat layer after the peeling of the protective film may reduce.

In the heat-shielding heat insulating substrate of the present invention, when the water contact angle of the surface of the protective topcoat layer of a standard substrate under the environment having a temperature of 23±1°C and a humidity of 50±5%RH is represented by γ degrees, and the water contact angle of the surface of the protective topcoat layer of the standard substrate under an environment having a humidity of 50±5%RH when the protective film is bonded to the standard substrate at room temperature, and the resultant is left to stand at room temperature for 24 hours, followed by the peeling of the protective film from the surface of the protective topcoat layer is represented by β' degrees, (β'-γ) is preferably from -15 to +3, more preferably from -13 to +3, still more preferably from -11 to +2, particularly preferably from -10 to +2, most preferably from -9 to +1. When the (β'-γ) falls within the range, even in the case where the protective film is bonded to the surface of the protective topcoat layer for a predetermined time period, variations in characteristics of the protective topcoat layer at the time of the peeling can be small. In addition, when the (β'-γ) falls within the range, even in the case where the protective film is bonded thereto for a predetermined time period, the protective film excellent in suppression of flawing can be easily peeled with satisfactory workability, and the scratch resistance of the protective topcoat layer after the peeling of the protective film may be excellent. When the (β'-γ) deviates from the range, in the protective topcoat layer at the time of the peeling, a fingerprint-wiping property may reduce, or a water droplet formed by condensation or the like may be liable to drip. In addition, when the (β'-γ) deviates from the range, the scratch resistance of the protective topcoat layer after the peeling of the protective film may reduce. The standard substrate is a standard substrate produced in Production Example 1 to be described later.

The temperature (50±1°C) serving as a condition for the measurement of the water contact angle is preferably 50±0.8°C, more preferably 50±0.5°C, still more preferably 50±0.2°C, particularly preferably 50°C.

The heat-shielding heat insulating substrate of the present invention is preferably a transparent plate-like member or a transparent film. The visible light transmittance of the heat-shielding heat insulating substrate of the present invention is preferably 30% or more, more preferably from 30% to 85%, still more preferably from 45% to 80%, particularly preferably from 55% to 80%, most preferably from 55% to 75%. The visible light transmittance is measured in conformity with JIS-A5759-2008 (film for a building window glass).

### <<2. Transparent Substrate Layer>>

The transparent substrate layer is preferably a transparent plate-like member, a transparent film, or a composite thereof. Examples of the transparent plate-like member include glass, an acrylic plate, and a polycarbonate plate. The transparent film is preferably a flexible transparent film. The visible light transmittance of the transparent substrate layer is preferably 80% or more, more preferably 85% or more, still more preferably 88% or more, particularly preferably 90% or more. The visible light transmittance is measured in conformity with JIS-A5759-2008 (film for a building window glass).

When the transparent substrate layer is a transparent plate-like member, the thickness of the transparent substrate layer is preferably from 1 mm to 60 mm, more preferably from 2 mm to 30 mm, still more preferably from 2 mm to 24 mm, particularly preferably from 3 mm to 18 mm, most preferably from 3 mm to 12 mm.

When the transparent substrate layer is a transparent film, the thickness of the transparent substrate layer is preferably from 5 µm to 500 µm, more preferably from 10 µm to 300 µm, still more preferably from 20 µm to 200 µm, particularly preferably from 30 µm to 100 µm.

When the transparent substrate layer is a transparent film, a material forming the transparent substrate layer is, for example, polyethylene terephthalate (PET), polyethylene naphthalate (PEN), polyether ether ketone (PEEK), or polycarbonate (PC). Of those, polyethylene terephthalate (PET) is preferred from, for example, the viewpoint that its heat resistance is excellent.

### <<3. Protective Topcoat Layer>>

The protective topcoat layer is arranged on the side of the infrared reflection layer opposite to the transparent substrate layer. The protective topcoat layer is preferably a layer to which the protective film is bonded.

The protective topcoat layer is preferably a layer formed by application. The formation of the protective topcoat layer by the application is, for example, the following formation: such an organic resin as described later, or a curable monomer or oligomer of the organic resin and an ester compound are dissolved in a solvent to prepare a solution; the solution is applied onto the topcoat layer; the solvent is dried; and then the residue is cured by irradiation with UV light, an electron beam, or the like, or the application of thermal energy to form the protective topcoat layer.

The protective topcoat layer preferably has a high visible light transmittance.

The far-infrared absorption of the protective topcoat layer is preferably small. When the far-infrared absorption in the protective topcoat layer is small, a far-infrared ray in a room is reflected to the inside of the room by the infrared reflection layer, and hence the heat-insulting effect of the room can be improved. A method of reducing the quantity of a far-infrared ray to be absorbed by the protective topcoat layer is, for example, a method involving using a material having a small far-infrared absorptivity as a material for the protective topcoat layer, or a method involving reducing the thickness of the protective topcoat layer. Meanwhile, when the far-infrared absorption in the protective topcoat layer is large, a far-infrared ray in the room is absorbed by the protective topcoat layer, and is released to the outside by heat conduction without being reflected by the infrared reflection layer. Accordingly, the heat-insulating property of the room may reduce.

From the viewpoint of reducing the quantity of a far-infrared ray to be absorbed, the thickness of the protective topcoat layer is preferably 500 nm or less, more preferably 300 nm or less, still more preferably 200 nm or less, still more preferably 150 nm or less, particularly preferably 120 nm or less, most preferably 100 nm or less. When the optical thickness of the protective topcoat layer (the product of its refractive index and physical thickness) overlaps the wavelength range of visible light, an "iris phenomenon" in which the surface of the heat-shielding heat insulating substrate of the present invention appears to be a rainbow pattern may occur owing to multiple reflection interference at an interface. The refractive index of a general resin is about 1.5. Accordingly, from the viewpoint of suppressing the iris phenomenon, the thickness of the protective topcoat layer is more preferably 200 nm or less.

The thickness of the protective topcoat layer is preferably 5 nm or more, more preferably 15 nm or more, still more preferably 30 nm or more, particularly preferably 50 nm or more from the viewpoint of an improvement in durability of the heat-shielding heat insulating substrate of the present invention in addition to the impartment of a mechanical strength and a chemical strength to the layer.

A material that has a high visible light transmittance, and is excellent in mechanical strength and chemical strength is preferred as the material for the protective topcoat layer. Examples of the material for the protective topcoat layer include an organic resin, an inorganic material, and an organic-inorganic hybrid material in which an organic component and an inorganic component are chemically bonded to each other. The number of kinds of the organic resins may be only one, or may be two or more. The number of kinds of the inorganic materials may be only one, or may be two or more. The number of kinds of the organic-inorganic hybrid materials may be only one, or may be two or more.

An example of the organic resin is an active ray-curable or thermosetting organic resin, and specific examples thereof include a fluororesin, an acrylic resin, a urethane-based resin, an ester-based resin, an epoxy-based resin, and a silicone-based resin. The organic resin is preferably an acrylic resin because the effect of the present invention can be further expressed.

Examples of the inorganic material include silicon oxide, silicon nitride, silicon oxynitride, aluminum oxide, titanium oxide, zirconium oxide, and sialon (SiAlON).

The protective topcoat layer is preferably, for example, a resin layer formed of a resin composition containing an organic resin, or a resin layer formed of a composition containing an organic-inorganic hybrid material, and is more preferably, for example, a resin layer formed of a resin composition containing an organic resin.

The protective topcoat layer preferably contains a coordinate bonding material. Any appropriate coordinate bonding material may be adopted as the coordinate bonding material to the extent that the effect of the present invention is not impaired as long as the material can form a coordinate bond with any other compound. The number of kinds of the coordinate bonding materials may be only one, or may be two or more. When the protective topcoat layer contains the coordinate bonding material, in, for example, the case where any other layer is directly laminated on the protective topcoat layer, a coordinate bonding strength can be expressed between the two layers to improve adhesiveness therebetween. In particular, when the other layer contains a metal oxide, an acidic group in the protective topcoat layer can express an affinity having a high coordinate bond property for the metal oxide in the other layer. In addition, the adhesiveness between the other layer and the protective topcoat layer can be improved to improve the strength of the protective topcoat layer, and hence the durability of the infrared reflection layer can be improved.

A compound having a group having a lone electron pair is preferred as the coordinate bonding material. An example of the group having a lone electron pair is a group having a coordinating atom, such as a phosphorus atom, a sulfur atom, an oxygen atom, or a nitrogen atom, and specific examples thereof include a phosphoric acid group, a sulfuric acid group, a thiol group, a carboxyl group, and an amino group.

An ester compound having an acidic group and a polymerizable functional group in the same molecule is preferred as the coordinate bonding material.

An example of the ester compound having an acidic group and a polymerizable functional group in the same molecule is an ester of: a polyacid, such as phosphoric acid, sulfuric acid, oxalic acid, succinic acid, phthalic acid, fumaric acid, or maleic acid; and a compound having a polymerizable functional group, such as an ethylenically unsaturated group, a silanol group, or an epoxy group, and a hydroxy group in a molecule thereof. Such ester compound may be a polyvalent ester, such as a diester or a triester, but it is preferred that at least one acidic group of the polyacid be not esterified.

From the viewpoint of improving the mechanical strength and chemical strength of the protective topcoat layer, the ester compound having an acidic group and a polymerizable functional group in the same molecule preferably contains a (meth)acryloyl group as a polymerizable functional group. The ester compound having an acidic group and a polymerizable functional group in the same molecule may have a plurality of polymerizable functional groups in a molecule thereof. The ester compound having an acidic group and a polymerizable functional group in the same molecule is preferably, for example, a phosphoric acid monoester compound or a phosphoric acid diester compound represented by the general formula (A). The phosphoric acid monoester compound and the phosphoric acid diester compound may be used in combination. When the phosphoric acid monoester compound or the phosphoric acid diester compound represented by the general formula (A) is adopted as the ester compound having an acidic group and a polymerizable functional group in the same molecule, a phosphoric acid hydroxy group is excellent in affinity for a metal oxide, and hence in the case where any other layer is directly laminated on the protective topcoat layer, and the other layer contains a metal oxide, the adhesiveness between the two layers can be further improved.

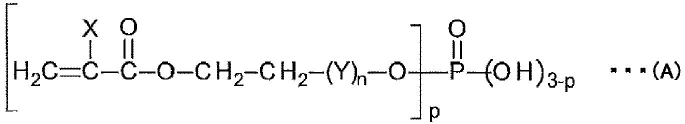

In the general formula (A), X represents a hydrogen atom or a methyl group, (Y) represents a -OCO(CH₂)₅- group, "n" represents 0 or 1, and "p" represents 1 or 2.

The content ratio of the coordinate bonding material in the protective topcoat layer is preferably from 1 wt% to 20 wt%, more preferably from 1.5 wt% to 17.5 wt%, still more preferably from 2 wt% to 15 wt%, particularly preferably from 2.5 wt% to 12.5 wt% . When the content ratio of the coordinate bonding material in the protective topcoat layer is excessively small, an improving effect on the strength or the adhesiveness may not be sufficiently obtained. When the content ratio of the coordinate bonding material in the protective topcoat layer is excessively large, the curing rate of the solution for forming the protective topcoat layer at the time of the formation of the protective topcoat layer may become smaller to reduce the hardness of the layer, or the sliding property of the surface of the protective topcoat layer may reduce to reduce the scratch resistance of the layer.

When an organic resin or an organic-inorganic hybrid material is used as the material for the protective topcoat layer, a cross-linked structure is preferably introduced. When the cross-linked structure is formed, the mechanical strength and chemical strength of the protective topcoat layer are improved, and hence its protective function for the infrared reflection layer is improved. Of such cross-linked structures, a cross-linked structure derived from the ester compound having an acidic group and a polymerizable functional group in the same molecule is preferably introduced.

### <<4. Undercoat Layer>>

The undercoat layer may be arranged on the infrared reflection layer-side surface of the transparent substrate layer. When the undercoat layer is arranged on the surface of the transparent substrate layer, the mechanical strength of the heat-shielding heat insulating substrate of the present invention can be improved, and the scratch resistance of the heat-shielding heat insulating substrate of the present invention can be improved.

The thickness of the undercoat layer is preferably from 0.2 µm to 5 µm, more preferably from 0.2 µm to 3 µm, still more preferably from 0.5 µm to 3 µm, particularly preferably from 1 µm to 2 µm. When the thickness of the undercoat layer falls within the range, the mechanical strength of the heat-shielding heat insulating substrate of the present invention can be improved, and the scratch resistance of the heat-shielding heat insulating substrate of the present invention can be further improved.

The undercoat layer is preferably a cured coating film of a curable resin, and may be formed by, for example, a method involving arranging a cured coating film of any appropriate UV-curable resin on the transparent substrate layer. Examples of such curable resin include an acrylic UV-curable resin and a silicone-based UV-curable resin.

The surface of the undercoat layer (opposite to the transparent substrate layer) maybe subjected to a surface modification treatment, such as a corona treatment, a plasma treatment, a flame treatment, an ozone treatment, a primer treatment, a glow treatment, a saponification treatment, or a treatment with a coupling agent, for the purpose of, for example, improving adhesiveness between the transparent substrate layer and the undercoat layer.

### <<5. Antireflection Layer>>

An anti reflection layer maybe arranged between the transparent substrate layer and the infrared reflection layer. The arrangement of the antireflection layer can improve the transparency of the heat-shielding heat insulating substrate of the present invention.

The thickness of the antireflection layer is preferably 30 nm or less, more preferably from 1 nm to 30 nm, still more preferably from 1 nm to 20 nm, particularly preferably from 1 nm to 15 nm.

Any appropriate method may be adopted as a method of forming the antireflection layer. Such film formation method is, for example, a film formation method based on a dry process, such as a sputtering method, a vacuum deposition method, a CVD method, or an electron beam deposition method. The method of forming the antireflection layer is preferably a film formation method based on a DC sputtering method. In the case where the film formation method based on the DC sputtering method is adopted, when a winding-type sputtering apparatus including a plurality of film-forming chambers is used, a plurality of such layers can be formed in one pass. Accordingly, the productivity of the antireflection layer can be significantly improved, and by extension, the productivity of the heat-shielding heat insulating substrate of the present invention can be significantly improved.

### <<6. Infrared Reflection Layer>>

Any appropriate layer may be adopted as the infrared reflection layer as long as the layer can achieve both of an improvement in heat-shielding property by the reflection of a near-infrared ray and an improvement in heat-insulating property by the reflection of a far-infrared ray.

One embodiment of the infrared reflection layer includes the first metal oxide layer, the metal layer, and the second metal oxide layer in the stated order, and the first metal oxide layer and the second metal oxide layer are directly laminated on the metal layer. In this embodiment, the first metal oxide layer and the second metal oxide layer may each be multilayered. The infrared reflection layer is formed of the first metal oxide layer, the metal layer, and the second metal oxide layer, and includes the first metal oxide layer, the metal layer, and the second metal oxide layer in the stated order. An embodiment described in, for example, JP 2016-93892 A or JP 2016-94012 A may be incorporated as one embodiment of such infrared reflection layer.

The metal layer has a central role in infrared reflection. From the viewpoint of improving the visible light transmittance and near-infrared reflectance of the infrared reflection layer without increasing the number of its laminated layers, the metal layer is preferably a silver alloy layer containing silver as a main component, or a gold alloy layer containing gold as a main component. For example, silver has a high free electron density, and hence can achieve high reflectances for a near-infrared ray and a far-infrared ray. Therefore, even when the number of the laminated layers forming the infrared reflection layer is small, both of an improvement in heat-shielding property by the reflection of a near-infrared ray and an improvement in heat-insulating property by the reflection of a far-infrared ray can be achieved.

When the metal layer is a silver alloy layer containing silver as a main component, the content ratio of silver in the metal layer is preferably from 85 wt% to 99.9 wt%, more preferably from 90 wt% to 99.8 wt%, still more preferably from 95 wt% to 99.7 wt%, particularly preferably from 97 wt% to 99.6 wt%. As the content ratio of silver in the metal layer becomes higher, the wavelength selectivity of each of the transmittance and reflectance of the infrared reflection layer is improved, and hence the visible light transmittance thereof can be improved. Meanwhile, when silver is exposed to an environment where moisture, oxygen, chlorine, or the like is present, or when silver is irradiated with UV light or visible light, its deterioration, such as oxidation or corrosion, may occur. Accordingly, the metal layer is preferably a silver alloy layer containing a metal except silver for the purpose of improving its durability. Specifically, as described above, the content ratio of silver in the metal layer is preferably 99.9 wt% or less.

When the metal layer is a silver alloy layer containing silver as a main component, as described above, the metal layer preferably contains a metal except silver for the purpose of improving its durability. The content ratio of the metal except silver in the metal layer is preferably from 0.1 wt% to 15 wt%, more preferably from 0.2 wt% to 10 wt%, still more preferably from 0.3 wt% to 5 wt%, particularly preferably from 0.4 wt% to 3 wt%. Examples of the metal except silver include palladium (Pd), gold (Au), copper (Cu), bismuth (Bi), germanium (Ge), and gallium (Ga). Of those, palladium (Pd) is preferred from the viewpoint that high durability can be imparted.

The metal oxide layers (the first metal oxide layer and the second metal oxide layer) are each arranged for the purpose of, for example, controlling the quantity of visible light to be reflected at an interface between the layer and the metal layer to achieve both of a high visible light transmittance and a high infrared reflectance. The metal oxide layers can also function as protective layers for preventing the deterioration of the metal layer. From the viewpoint of improving the wavelength selectivity of each of reflection and transmission in the infrared reflection layer, the refractive index of each of the metal oxide layers for visible light is preferably 1.5 or more, more preferably 1.6 or more, still more preferably 1.7 or more.

The metal oxide layers (the first metal oxide layer and the second metal oxide layer) each preferably contain an oxide of a metal, such as Ti, Zr, Hf, Nb, Zn, Al, Ga, In, Tl, or Sn, or a composite oxide of these metals. The metal oxide layers each more preferably contain a composite metal oxide containing zinc oxide. The metal oxide layers are preferably amorphous. When the metal oxide layers are amorphous layers each containing zinc oxide, the durability of each of the metal oxide layers itself is improved, and the action of each of the layers as a protective layer for the metal layer is improved. Accordingly, the deterioration of the metal layer can be suppressed.

The metal oxide layers (the first metal oxide layer and the second metal oxide layer) are each particularly preferably a composite metal oxide containing zinc oxide. In this case, the content ratio of zinc oxide in each of the metal oxide layers (in each of the first metal oxide layer and the second metal oxide layer) is preferably 3 parts by weight or more, more preferably 5 parts by weight or more, still more preferably 7 parts by weight or more with respect to 100 parts by weight of the total of metal oxides. When the content ratio of zinc oxide falls within the range, the metal oxide layers easily become amorphous layers, and hence the durability of each of the layers tends to be improved. Meanwhile, when the content ratio of zinc oxide is excessively large, the durability may reduce, or the visible light transmittance of each of the layers may reduce. Accordingly, the content ratio of zinc oxide in each of the metal oxide layers is preferably 60 parts by weight or less, more preferably 50 parts by weight or less, still more preferably 40 parts by weight or less with respect to 100 parts by weight of the total of the metal oxides.

The composite metal oxide containing zinc oxide is preferably an indium-zinc composite oxide (IZO), a zinc-tin composite oxide (ZTO), or an indium-tin-zinc composite oxide (ITZO) from the viewpoint that all of the visible light transmittance, refractive index, and durability of each of the metal oxide layers can be satisfied. Those composite oxides may each further contain a metal, such as Al or Ga, or an oxide of such metal.

The metal oxide layers (the first metal oxide layer and the second metal oxide layer) may each be multilayered for improving its scratch resistance or the like.

When any one of the metal oxide layers is multilayered, for example, the following metal oxide layer (X) may be included.

That is, the metal oxide layer (X) is an oxide, nitride, oxynitride, or non-oxynitride containing one or more kinds belonging to Group 13 or Group 14 in the periodic table as main components, and contains one or more kinds of components belonging to Group 3 or Group 4 in the periodic table. It is preferred that the metal oxide layer (X) be an oxide, nitride, oxynitride, non-nitride, or non-oxide containing one or more kinds belonging to Group 14 as main components, and contain one or more kinds of components belonging to Group 3 or Group 4 in the periodic table. It is more preferred that the metal oxide layer (X) contain at least one kind selected from an oxide or oxynitride containing Si and Zr, an oxide or oxynitride containing Si and Y, and an oxide or oxynitride containing Si and Ti. It is particularly preferred that the metal oxide layer (X) contain at least one kind selected from an oxide containing Si and Zr, an oxide containing Si and Y, and an oxide containing Si and Ti.

An element belonging to Group 14 hardly becomes an ion because the number of its outermost electrons is 4. An element belonging to Group 13 hardly becomes an anion because the number of its outermost electrons is 3. Accordingly, the hardness of the nitride, the oxynitride, the non-nitride, or the non-oxide is considered to become higher.

The addition of an element belonging to Group 3 or Group 4 in the periodic table improves the strength of the metal oxide layer (X), and improves the corrosion resistance and heat resistance thereof through, for example, the densification of the crystal of an element serving as a main component or the maximization of the density of the molecular structure thereof.

The addition amount of the element belonging to Group 3 or Group 4 in the periodic table is preferably from 0.01 atm% to 49.9 atm%, more preferably from 0.05 atm% to 40.0 atm%, still more preferably from 0.1 atm% to 40.0 atm%, particularly preferably from 0.5 atm% to 35.0 atm% because the effect of the present invention can be further expressed. When the addition amount of the element belonging to Group 3 or Group 4 in the periodic table is small, there is a risk in that the element is not uniformly inserted into the entirety of the matrix of the metal oxide layer (X), and hence the effect of the present invention cannot be expressed. Meanwhile, when the addition amount of the element belonging to Group 3 or Group 4 in the periodic table is excessively large, compatibility between the element and the main component may deteriorate to preclude the expression of the effect of the present invention. The compatibility may be identified in a phase diagram.

The thicknesses of the metal layer and the metal oxide layers (the first metal oxide layer and the second metal oxide layer) may be appropriately set in consideration of, for example, the refractive indices of their materials so that the infrared reflection layer may transmit visible light and selectively reflect a near-infrared ray. The thickness of the metal layer is preferably from 5 nm to 50 nm, more preferably from 5 nm to 25 nm, still more preferably from 10 nm to 18 nm. The thickness of each of the metal oxide layers (the thickness of each of the first metal oxide layer and the second metal oxide layer) is preferably from 1 nm to 80 nm, more preferably from 1 nm to 50 nm, still more preferably from 1 nm to 30 nm, particularly preferably from 2 nm to 25 nm. In the heat-shielding heat insulating substrate of the present invention, the thickness of each of the metal oxide layers (the thickness of each of the first metal oxide layer and the second metal oxide layer) can be made smaller than the level of a conventional product because the mechanical strength of the substrate can be preferably improved.

Any appropriate method may be adopted as a method of forming each of the metal layer and the metal oxide layers. Such film formation method is, for example, a film formation method based on a dry process, such as a sputtering method, a vacuum deposition method, a CVD method, or an electron beam deposition method. The method of forming each of the metal layer and the metal oxide layers is preferably a film formation method based on a DC sputtering method. In the case where the film formation method based on the DC sputtering method is adopted, when a winding-type sputtering apparatus including a plurality of film-forming chambers is used, a plurality of such layers can be formed in one pass. Accordingly, the productivity of the infrared reflection layer can be significantly improved, and by extension, the productivity of the heat-shielding heat insulating substrate of the present invention can be significantly improved. In addition, a conductive impurity may be added to a target to be subjected to DC sputtering for imparting conductivity thereto, or part of the target may be made reductive. Accordingly, an impurity may be included in any such layer, or the composition of the layer may be different from stoichiometric composition, but the inclusion or the difference does not matter as long as the effect of the present invention is exhibited.

For example, an embodiment of a base material layer described in JP 2014-30910 A may be incorporated as another embodiment of the infrared reflection layer.

### <<7. Protective Film>>

The protective film is arranged on the surface of the protective topcoat layer opposite to the infrared reflection layer.

The thickness of the protective film is preferably from 10 µm to 150 µm, more preferably from 25 µm to 100 µm, still more preferably from 30 µm to 75 µm, particularly preferably from 35 µm to 65 µm, most preferably from 35 µm to 50 µm.

The protective film preferably includes a base material film and a pressure-sensitive adhesive layer.

The protective film may be produced by any appropriate method. Such production may be performed in conformity with any appropriate production method, such as:
(1) a method involving applying a solution or heat melt of a formation material for the pressure-sensitive adhesive layer onto the base material film;
(2) a method involving applying a solution or heat melt of the formation material for the pressure-sensitive adhesive layer onto a separator to form the pressure-sensitive adhesive layer, and transferring the layer onto the base material film;
(3) a method involving extruding the formation material for the pressure-sensitive adhesive layer onto the base material film to form and apply the layer thereto;
(4) a method involving extruding the base material film and the pressure-sensitive adhesive layer in two or more layers;
(5) a method involving laminating the pressure-sensitive adhesive layer alone on the base material film or a method involving laminating two layers, that is, a laminate layer and the pressure-sensitive adhesive layer thereon; or
(6) a method involving laminating two or more layers including the pressure-sensitive adhesive layer and a formation material for the base material film, such as a film or a laminate layer.

As an application method, there may be used, for example, a roll coater method, a comma coater method, a die coater method, a reverse coater method, a silk screen method, or a gravure coater method.

### <7-1. Base Material Film>

The number of the base material films may be only one, or may be two or more. The base material film may be stretched.

The thickness of the base material film is preferably from 4 µm to 450 µm, more preferably from 8 µm to 400 µm, still more preferably from 12 µm to 350 µm, particularly preferably from 16 µm to 250 µm.

For the purpose of, for example, forming a winding body that can be easily rewound, the surface of the base material film on which the pressure-sensitive adhesive layer is not arranged may be subjected to a release treatment by adding, for example, a fatty acid amide, polyethyleneimine, or a long-chain alkyl-based additive to the base material film, or a coat layer formed of any appropriate releasing agent, such as a silicone-, long-chain alkyl-, or fluorine-based releasing agent, may be arranged on the surface.

Any appropriate material may be adopted as a material for the base material film in accordance with applications. Examples thereof include a plastic, paper, a metal film, and a non-woven fabric. Of those, a plastic is preferred. That is, the base material film is preferably a plastic film. The base material film may be formed of one kind of material, or may be formed of two or more kinds of materials. The base material film may be formed of, for example, two or more kinds of plastics.

Examples of the plastic include a polyester-based resin, a polyamide-based resin, and a polyolefin-based resin. Examples of the polyester-based resin include polyethylene terephthalate, polybutylene terephthalate, and polyethylene naphthalate. Examples of the polyolefin-based resin include a homopolymer of an olefin monomer and a copolymer of an olefin monomer. Specific examples of the polyolefin-based resin include: homopolypropylene; a block-type, random-type, or graft-type propylene-based copolymer containing an ethylene component as a copolymerized component; reactor-TPO; a low-density, high-density, linear low-density, or ultralow-density ethylene-based polymer; and ethylene-based copolymers, such as an ethylene-propylene copolymer, an ethylene-vinyl acetate copolymer, an ethylene-methyl acrylate copolymer, an ethylene-ethyl acrylate copolymer, an ethylene-butyl acrylate copolymer, an ethylene-methacrylic acid copolymer, and an ethylene-methyl methacrylate copolymer.

The base material film may contain any appropriate additive as required. Examples of the additive that may be incorporated into the base material film include an antioxidant, a UV absorber, a light stabilizer, an antistatic agent, a filler, and a pigment. The kinds, number, and amount of the additives that maybe incorporated into the base material film may be appropriately set in accordance with purposes . In particular, when the material for the base material film is a plastic, some of the above-mentioned additives are preferably incorporated for the purpose of, for example, preventing the deterioration of the film. From the viewpoint of, for example, improving the weatherability of the film, particularly preferred examples of the additive include an antioxidant, a UV absorber, a light stabilizer, and a filler.

Any appropriate antioxidant may be adopted as the antioxidant. Examples of such antioxidant include a phenol-based antioxidant, a phosphorus-based processing heat stabilizer, a lactone-based processing heat stabilizer, a sulfur-based heat-resistant stabilizer, and a phenol-phosphorus-based antioxidant. The content ratio of the antioxidant is preferably 1 wt% or less, more preferably 0.5 wt% or less, still more preferably from 0.01 wt% to 0.2 wt% with respect to the base resin of the base material film (when the base material film is a blend, the blend is the base resin).

Any appropriate UV absorber may be adopted as the UV absorber. Examples of such UV absorber include a benzotriazole-based UV absorber, a triazine-based UV absorber, and a benzophenone-based UV absorber. The content ratio of the UV absorber is preferably 2 wt% or less, more preferably 1 wt% or less, still more preferably from 0.01 wt% to 0.5 wt% with respect to the base resin forming the base material film (when the base material film is a blend, the blend is the base resin).

Any appropriate light stabilizer may be adopted as the light stabilizer. Examples of such light stabilizer include a hindered amine-based light stabilizer and a benzoate-based light stabilizer. The content ratio of the light stabilizer is preferably 2 wt% or less, more preferably 1 wt% or less, still more preferably from 0.01 wt% to 0.5 wt% with respect to the base resin forming the base material film (when the base material film is a blend, the blend is the base resin).

Any appropriate filler may be adopted as the filler. Such filler is, for example, an inorganic filler. Specific examples of the inorganic filler include carbon black, titanium oxide, and zinc oxide. The content ratio of the filler is preferably 20 wt% or less, more preferably 10 wt% or less, still more preferably from 0.01 wt% to 10 wt% with respect to the base resin forming the base material film (when the base material film is a blend, the blend is the base resin).

Further, preferred examples of the additive include inorganic, low-molecular weight-type, and high-molecular weight-type antistatic agents intended to impart antistatic properties, such as a surfactant, an inorganic salt, a polyhydric alcohol, a metal compound, and carbon. Of those, a high-molecular weight-type antistatic agent or carbon is particularly preferred from the viewpoints of preventing the contamination of the base material film and maintaining the pressure-sensitive adhesive property thereof.

### <7-2. Pressure-sensitive Adhesive Layer>

The pressure-sensitive adhesive layer may be produced by any appropriate production method. Such production method is, for example, a method involving applying a composition serving as a formation material for the pressure-sensitive adhesive layer onto the base material film to form the pressure-sensitive adhesive layer on the base material film. Examples of such application method include roll coating, gravure coating, reverse coating, roll brushing, spray coating, an air knife coating method, and extrusion coating with a die coater or the like.

The thickness of the pressure-sensitive adhesive layer is preferably from 1 µm to 150 µm, more preferably from 2 µm to 140 µm, still more preferably from 3 µm to 130 µm, still more preferably from 4 µm to 120 µm, still more preferably from 5 µm to 100 µm, still more preferably from 10 µm to 80 µm, particularly preferably from 20 µm to 60 µm, most preferably from 30 µm to 60 µm.

The pressure-sensitive adhesive layer includes a pressure-sensitive adhesive. The pressure-sensitive adhesive is formed of a pressure-sensitive adhesive composition.

The pressure-sensitive adhesive composition preferably contains a base polymer.

The pressure-sensitive adhesive composition may contain a silicone-based additive and/or a fluorine-based additive. When the base polymer is an acrylic resin to be described later, the composition preferably contains the silicone-based additive.

The content of the silicone-based additive and/or the fluorine-based additive in the pressure-sensitive adhesive composition is preferably from 0.01 part by weight to 50 parts by weight, more preferably from 0.02 part by weight to 25 parts by weight, still more preferably from 0.025 part by weight to 10 parts by weight, particularly preferably from 0.03 part by weight to 5 parts by weight, most preferably from 0.05 part by weight to 3 parts by weight in terms of the total amount of the silicone-based additive and the fluorine-based additive with respect to 100 parts by weight of the base polymer.

### <7-2-1. Base Polymer>

The base polymer is preferably at least one kind selected from a urethane-based resin, an acrylic resin, a rubber-based resin, and a silicone-based resin. The base polymer is more preferably the urethane-based resin or the acrylic resin because the effect of the present invention can be further expressed, and the base polymer is still more preferably the urethane-based resin.

### [7-2-1-1. Urethane-based Resin]

Any appropriate urethane-based resin may be adopted as the urethane-based resin to the extent that the effect of the present invention is not impaired. The urethane-based resin is preferably a urethane-based resin formed of a composition containing a polyol (A) and a polyfunctional isocyanate compound (B), or a urethane-based resin formed of a composition containing a urethane prepolymer (C) and the polyfunctional isocyanate compound (B). When any such resin as described above is adopted as the urethane-based resin, the effect of the present invention can be further expressed.

The urethane-based resin may contain any appropriate component to the extent that the effect of the present invention is not impaired. Examples of such component include a resin component except the urethane-based resin, a tackifier, an inorganic filler, an organic filler, metal powder, a pigment, a foil-like material, a softener, an age resistor, a conductive agent, a UV absorber, an antioxidant, a light stabilizer, a surface lubricant, a leveling agent, a corrosion inhibitor, a heat stabilizer, a polymerization inhibitor, a lubricant, a solvent, and a catalyst.

The urethane-based resin preferably contains a deterioration-preventing agent, such as an antioxidant, a UV absorber, or a light stabilizer. When the urethane-based resin contains the deterioration-preventing agent, the pressure-sensitive adhesive layer can be excellent in adhesive residue-preventing property; for example, even when the layer is stored under a warmed state after having been bonded to an adherend, an adhesive residue is less liable to occur on the adherend. The number of kinds of the deterioration-preventing agents may be only one, or may be two or more. The deterioration-preventing agent is particularly preferably an antioxidant.

Examples of the antioxidant include a radical chain inhibitor and a peroxide decomposer.

Examples of the radical chain inhibitor include a phenol-based antioxidant and an amine-based antioxidant.

Examples of the peroxide decomposer include a sulfur-based antioxidant and a phosphorus-based antioxidant.

Examples of the phenol-based antioxidant include a monophenol-based antioxidant, a bisphenol-based antioxidant, and a high-molecular phenol-based antioxidant.

Examples of the monophenol-based antioxidant include 2,6-di-t-butyl-p-cresol, butylated hydroxyanisole, 2,6-di-t-butyl-4-ethylphenol, and stearyl β-(3,5-di-t-butyl-4-hydroxyphenyl)propionate.

Examples of the bisphenol-based antioxidant include 2,2'-methylenebis(4-methyl-6-t-butylphenol), 2,2'-methylenebis(4-ethyl-6-t-butylphenol), 4,4'-thiobis(3-methyl-6-t-butylphenol), 4,4'-butylidenebis(3-methyl-6-t-butylphenol), and 3,9-bis[1,1-dimethyl-2-[β-(3-t-butyl-4-hydroxy-5-methylphenyl) propionyloxy]ethyl]-2,4,8,10-tetraoxaspiro[5,5]undecane.

Examples of the high-molecular phenol-based antioxidant include 1,1,3-tris(2-methyl-4-hydroxy-5-t-butylphenyl)butane, 1,3,5-trimethyl-2,4,6-tris(3,5-di-t-butyl-4-hydroxybenzyl)benz ene, tetrakis-[methylene-3-(3',5'-di-t-butyl-4'-hydroxyphenyl)propi onate]methane, bis[3,3'-bis-(4'-hydroxy-3'-t-butylphenyl)butyric acid] glycol ester, and 1,3,5-tris(3',5'-di-t-butyl-4'-hydroxybenzyl)-S-triazine-2,4,6 -(1H,3H,5H)trione, and tocophenol.

Examples of the sulfur-based antioxidant include dilauryl 3,3'-thiodipropionate, dimyristyl 3,3'-thiodipropionate, and distearyl 3,3'-thiodipropionate.

Examples of the phosphorus-based antioxidant include triphenyl phosphite, diphenyl isodecyl phosphite, and phenyl diisodecyl phosphite.

Examples of the UV absorber include a benzophenone-based UV absorber, a benzotriazole-based UV absorber, a salicylic acid-based UV absorber, an oxanilide-based UV absorber, a cyanoacrylate-based UV absorber, and a triazine-based UV absorber.

Examples of the benzophenone-based UV absorber include 2,4-dihydroxybenzophenone, 2-hydroxy-4-methoxybenzophenone, 2-hydroxy-4-octoxybenzophenone, 2-hydroxy-4-dodecyloxybenzophenone, 2,2'-dihydroxy-4-dimethoxybenzophenone, 2,2'-dihydroxy-4,4'-dimethoxybenzophenone, 2-hydroxy-4-methoxy-5-sulfobenzophenone, and bis(2-methoxy-4-hydroxy-5-benzoylphenyl)methane.

Examples of the benzotriazole-based UV absorber include 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2'-hydroxy-3'-tert-butyl-5'-methylphenyl)-5-chlorobenzotria zole, 2-(2'-hydroxy-3',5'-di-tert-butylphenyl)-5-chlorobenzotriazole, 2-(2'-hydroxy-3',5'-di-tert-amylphenyl)benzotriazole, 2-(2'-hydroxy-4'-octoxyphenyl)benzotriazole, 2-[2'-hydroxy-3'-(3",4",5",6",-tetrahydrophthalimidomethyl)-5' -methylphenyl]benzotriazole, 2,2'-methylenebis[4-(1,1,3,3-tetramethylbutyl)-6-(2H-benzotria zol-2-yl)phenol], and 2-(2'-hydroxy-5'-methacryloxyphenyl)-2H-benzotriazole.

Examples of the salicylic acid-basedUV absorber include phenyl salicylate, p-tert-butylphenyl salicylate, and p-octylphenyl salicylate.

Examples of the cyanoacrylate-based UV absorber include 2-ethylhexyl-2-cyano-3,3'-diphenyl acrylate and ethyl-2-cyano-3,3'-diphenyl acrylate.

Examples of the light stabilizer include a hindered amine-based light stabilizer and a UV stabilizer.

Examples of the hindered amine-based light stabilizer may include bis(2,2,6,6-tetramethyl-4-piperidyl) sebacate, bis(1,2,2,6,6-pentamethyl-4-piperidyl) sebacate, and methyl-1,2,2,6,6-pentamethyl-4-piperidyl sebacate.

Examples of the UV stabilizer include nickel bis(octylphenyl)sulfide, [2,2'-thiobis(4-tert-octylphenolato)]-n-butylamine nickel, nickel complex-3,5-di-tert-butyl-4-hydroxybenzyl-phosphate monoethylate, nickel-dibutyl dithiocarbamate, and a benzoate-type quencher.

### (7-2-1-1-1. Urethane-based Resin formed of Composition containing Polyol (A) and Polyfunctional Isocyanate Compound (B))

Specifically, the urethane-based resin formed of the composition containing the polyol (A) and the polyfunctional isocyanate compound (B) is preferably a urethane-based resin obtained by curing the composition containing the polyol (A) and the polyfunctional isocyanate compound (B).

The number of kinds of the polyols (A) may be only one, or may be two or more.

The number of kinds of the polyfunctional isocyanate compounds (B) may be only one, or may be two or more.

Preferred examples of the polyol (A) include polyester polyol, polyether polyol, polycaprolactone polyol, polycarbonate polyol, and castor oil-based polyol. The polyol (A) is more preferably polyether polyol.

The polyester polyol may be obtained through, for example, esterification reaction between a polyol component and an acid component.

Examples of the polyol component include ethylene glycol, diethylene glycol, 1,3-butanediol, 1,4-butanediol, neopentyl glycol, 3-methyl-1,5-pentanediol, 2-butyl-2-ethyl-1,3-propanediol, 2,4-diethyl-1,5-pentanediol, 1,2-hexanediol, 1,6-hexanediol, 1,8-octanediol, 1,9-nonanediol, 2-methyl-1,8-octanediol, 1,8-decanediol, octadecanediol, glycerin, trimethylolpropane, pentaerythritol, hexanetriol, and polypropylene glycol. Examples of the acid component include succinic acid, methylsuccinic acid, adipic acid, pimelic acid, azelaic acid, sebacic acid, 1,12-dodecanedioic acid, 1,14-tetradecanedioic acid, dimer acid, 2-methyl-1,4-cyclohexanedicarboxylic acid, 2-ethyl-1,4-cyclohexanedicarboxylic acid, terephthalic acid, isophthalic acid, phthalic acid, 1,4-naphthalenedicarboxylic acid, 4,4'-biphenyldicarboxylic acid, and acid anhydrides thereof.

An example of the polyether polyol is a polyether polyol obtained by subjecting water, a low-molecular polyol (e.g., propylene glycol, ethylene glycol, glycerin, trimethylolpropane, or pentaerythritol), a bisphenol (e.g., bisphenol A), or a dihydroxybenzene (e.g., catechol, resorcin, or hydroquinone) serving as an initiator to addition polymerization with an alkylene oxide, such as ethylene oxide, propylene oxide, or butylene oxide. Specific examples thereof include polyethylene glycol, polypropylene glycol, and polytetramethylene glycol.

An example of the polycaprolactone polyol is a caprolactone-based polyester diol obtained by subjecting a cyclic ester monomer, such as ε-caprolactone or σ-valerolactone, to ring-opening polymerization.

Examples of the polycarbonate polyol include: a polycarbonate polyol obtained by subjecting the polyol component and phosgene to a polycondensation reaction; a polycarbonate polyol obtained by subjecting the polyol component and a carbonate diester, such as dimethyl carbonate, diethyl carbonate, dipropyl carbonate, diisopropyl carbonate, dibutyl carbonate, ethylbutyl carbonate, ethylene carbonate, propylene carbonate, diphenyl carbonate, or dibenzyl carbonate, to transesterification condensation; a copolymerized polycarbonate polyol obtained by using two or more kinds of the polyol components in combination; a polycarbonate polyol obtained by subjecting any of the various polycarbonate polyols and a carboxyl group-containing compound to an esterification reaction; a polycarbonate polyol obtained by subjecting any of the various polycarbonate polyols and a hydroxyl group-containing compound to an etherification reaction; a polycarbonate polyol obtained by subjecting any of the various polycarbonate polyols and an ester compound to a transesterification reaction; a polycarbonate polyol obtained by subjecting any of the various polycarbonate polyols and a hydroxyl group-containing compound to a transesterification reaction; a polyester-based polycarbonate polyol obtained by subjecting any of the various polycarbonate polyols and a dicarboxylic acid compound to a polycondensation reaction; and a copolymerized polyether-based polycarbonate polyol obtained by subjecting any of the various polycarbonate polyols and an alkylene oxide to copolymerization.

An example of the castor oil-based polyol is a castor oil-based polyol obtained by causing a castor oil fatty acid and the polyol component to react with each other. A specific example thereof is a castor oil-based polyol obtained by causing a castor oil fatty acid and polypropylene glycol to react with each other.

The number-average molecular weight Mn of the polyol (A) is preferably from 300 to 100, 000, more preferably from 400 to 75, 000, still more preferably from 450 to 50,000, particularly preferably from 500 to 30,000, most preferably from 750 to 25,000. When the number-average molecular weight Mn of the polyol (A) is adjusted within the range, the effect of the present invention can be further expressed.

The polyol (A) preferably contains a polyol (A1) having 3 OH groups and having a number-average molecular weight Mn of from 300 to 100,000. The number of kinds of the polyols (A1) may be only one, or may be two or more.

The content ratio of the polyol (A1) in the polyol (A) is preferably 5 wt% or more, more preferably from 25 wt% to 100 wt%, still more preferably from 50 wt% to 100 wt%, particularly preferably from 70 wt% to 100 wt%, most preferably from 90 wt% to 100 wt%. When the content ratio of the polyol (A1) in the polyol (A) is adjusted within the range, the effect of the present invention can be further expressed.

The number-average molecular weight Mn of the polyol (A1) is preferably from 400 to 80,000, more preferably from 500 to 60,000, still more preferably from 600 to 40,000, still more preferably from 700 to 30,000, particularly preferably from 800 to 20,000, most preferably from 900 to 15,000. When the number-average molecular weight Mn of the polyol (A1) is adjusted within the range, the effect of the present invention can be further expressed.

The polyol (A1) may contain a polyol (A1a) having a number-average molecular weight Mn of less than 3,000. The content ratio of the polyol (A1a) in the polyol (A1) is preferably from 0 wt% to 50 wt%, more preferably from 0 wt% to 30 wt%, still more preferably from 0 wt% to 20 wt%, particularly preferably from 0 wt% to 10 wt%, most preferably from 0 wt% to 5 wt%. When the content ratio of the polyol (A1a) in the polyol (A1) is adjusted within the range, the effect of the present invention can be further expressed.

The polyol (A) may contain a polyol (A2) having 4 or more OH groups and having a number-average molecular weight Mn of 20,000 or less. The number of kinds of the polyols (A2) may be only one, or may be two or more. The number-average molecular weight Mn of the polyol (A2) is preferably from 100 to 20,000, more preferably from 150 to 10,000, still more preferably from 200 to 7,500, particularly preferably from 300 to 6,000, most preferably from 300 to 5,000. When the number-average molecular weight Mn of the polyol (A2) deviates from the range, in particular, the property by which the pressure-sensitive adhesive strength of the pressure-sensitive adhesive layer is raised with time may become higher, and hence there is a risk in that the effect of the present invention cannot be expressed. Preferred examples of the polyol (A2) include a polyol having 4 OH groups (tetraol), a polyol having 5 OH groups (pentaol), and a polyol having 6 OH groups (hexaol).

The content ratio of the polyol (A2) in the polyol (A) is preferably 70 wt% or less, more preferably 60 wt% or less, still more preferably 40 wt% or less, particularly preferably 30 wt% or less. When the content ratio of at least one kind of the polyol having 4 OH groups (tetraol), the polyol having 5 OH groups (pentaol), or the polyol having 6 OH groups (hexaol) serving as the polyol (A2) in the polyol (A) is adjusted within the range, the effect of the present invention can be further expressed.

The content ratio of a polyol having 4 or more OH groups and having a number-average molecular weight Mn of 20,000 or less in the polyol (A2) is preferably less than 70 wt%, more preferably 60 wt% or less, still more preferably 50 wt% or less, particularly preferably 40 wt% or less, most preferably 30 wt% or less with respect to the entirety of the polyol (A). When the content ratio of the polyol having 4 or more OH groups and having a number-average molecular weight Mn of 20,000 or less in the polyol (A2) is adjusted within the range, the effect of the present invention can be further expressed.

One embodiment of the composition of the polyol (A1) that allows the effect of the present invention to be further expressed (referred to as "embodiment A") is, for example, the following composition: a ratio among a polyol having a number-average molecular weight Mn of 300 or more and less than 2,000, a polyol having a number-average molecular weight Mn of 2,000 or more and less than 5,000, and a polyol having a number-average molecular weight Mn of 5,000 or more and 100,000 or less is 0.1 to 10/3 to 50/45 to 95 (weight ratio). The composition ratio is preferably 0.3 to 8/4 to 40/60 to 95 (weight ratio), more preferably 0.5 to 5/5 to 30/70 to 90 (weight ratio).

The number of kinds of the polyfunctional isocyanate compounds (B) may be only one, or may be two or more.

Any appropriate polyfunctional isocyanate compound that may be used in a urethanization reaction may be adopted as the polyfunctional isocyanate compound (B). Examples of such polyfunctional isocyanate compound (B) include a polyfunctional aliphatic isocyanate compound, a polyfunctional alicyclic isocyanate compound, and a polyfunctional aromatic isocyanate compound.

Examples of the polyfunctional aliphatic isocyanate compound include trimethylene diisocyanate, tetramethylene diisocyanate, hexamethylene diisocyanate, pentamethylene diisocyanate, 1,2-propylene diisocyanate, 1,3-butylene diisocyanate, dodecamethylene diisocyanate, and 2,4,4-trimethylhexamethylene diisocyanate.

Examples of the polyfunctional alicyclic isocyanate compound include 1,3-cyclopentene diisocyanate, 1,3-cyclohexane diisocyanate, 1,4-cyclohexane diisocyanate, isophorone diisocyanate, hydrogenated diphenylmethane diisocyanate, hydrogenated xylylene diisocyanate, hydrogenated tolylene diisocyanate, and hydrogenated tetramethylxylylene diisocyanate.

Examples of the polyfunctional aromatic diisocyanate compound include phenylene diisocyanate, 2,4-tolylene diisocyanate, 2,6-tolylene diisocyanate, 2,2'-diphenylmethane diisocyanate, 4,4'-diphenylmethane diisocyanate, 4,4'-toluidine diisocyanate, 4,4'-diphenyl ether diisocyanate, 4,4'-diphenyl diisocyanate, 1,5-naphthalene diisocyanate, and xylylene diisocyanate.

The examples of the polyfunctional isocyanate compound (B) also include trimethylolpropane adducts of such various polyfunctional isocyanate compounds as described above, biurets thereof each formed by a reaction with water, and trimers thereof each having an isocyanurate ring. In addition, those products may be used in combination.

An equivalent ratio "NCO group/OH group" between an NCO group and a OH group in the polyol (A) and the polyfunctional isocyanate compound (B) is preferably 5.0 or less, more preferably from 0.1 to 3.0, still more preferably from 0.2 to 2.5, particularly preferably from 0.3 to 2.25, most preferably from 0.5 to 2.0. When the equivalent ratio "NCO group/OH group" is adjusted within the range, the effect of the present invention can be further expressed.

The content ratio of the polyfunctional isocyanate compound (B) is preferably from 1.0 wt% to 30 wt%, more preferably from 1.5 wt% to 27 wt%, still more preferably from 2.0 wt% to 25 wt%, particularly preferably from 2.3 wt% to 23 wt%, most preferably from 2.5 wt% to 20 wt% with respect to the polyol (A). When the content ratio of the polyfunctional isocyanate compound (B) is adjusted within the range, the effect of the present invention can be further expressed.

Specifically, the urethane-based resin is preferably formed by curing the composition containing the polyol (A) and the polyfunctional isocyanate compound (B).

Any appropriate method, such as a urethanization reaction method involving using bulk polymerization, solution polymerization, or the like, may be adopted as a method involving curing the composition containing the polyol (A) and the polyfunctional isocyanate compound (B) to form the urethane-based resin to the extent that the effect of the present invention is not impaired.

A catalyst is preferably used for curing the composition containing the polyol (A) and the polyfunctional isocyanate compound (B). Examples of such catalyst include an organometallic compound and a tertiary amine compound.

Examples of the organometallic compound may include an iron-based compound, a tin-based compound, a titanium-based compound, a zirconium-based compound, a lead-based compound, a cobalt-based compound, and a zinc-based compound. Of those, an iron-based compound and a tin-based compound are preferred from the viewpoints of a reaction rate and the pot life of the pressure-sensitive adhesive layer.

Examples of the iron-based compound include iron acetylacetonate and iron 2-ethylhexanoate.

Examples of the tin-based compound include dibutyltin dichloride, dibutyltin oxide, dibutyltin dibromide, dibutyltin maleate, dibutyltin dilaurate, dibutyltin diacetate, dibutyltin sulfide, tributyltin methoxide, tributyltin acetate, triethyltin ethoxide, tributyltin ethoxide, dioctyltin oxide, dioctyltin dilaurate, tributyltin chloride, tributyltin trichloroacetate, and tin 2-ethylhexanoate.

Examples of the titanium-based compound include dibutyltitanium dichloride, tetrabutyl titanate, and butoxytitanium trichloride.

Examples of the zirconium-based compound include zirconium naphthenate and zirconium acetylacetonate.

Examples of the lead-based compound include lead oleate, lead 2-ethylhexanoate, lead benzoate, and lead naphthenate.

Examples of the cobalt-based compound include cobalt 2-ethylhexanoate and cobalt benzoate.

Examples of the zinc-based compound include zinc naphthenate and zinc 2-ethylhexanoate.

Examples of the tertiary amine compound include triethylamine, triethylenediamine, and 1,8-diazabicyclo-(5,4,0)-undecene-7.

The number of kinds of the catalysts may be only one, or may be two or more. In addition, the catalyst may be used in combination with, for example, a cross-linking retarder. The amount of the catalyst is preferably from 0.005 wt% to 1.00 wt%, more preferably from 0.01 wt% to 0.75 wt%, still more preferably from 0.01 wt% to 0.50 wt%, particularly preferably from 0.01 wt% to 0.20 wt% with respect to the polyol (A). When the amount of the catalyst is adjusted within the range, the effect of the present invention can be further expressed.

Any appropriate other component may be incorporated into the composition containing the polyol (A) and the polyfunctional isocyanate compound (B) to the extent that the effect of the present invention is not impaired. Examples of such other component include a resin component except the polyurethane-based resin, a tackifier, an inorganic filler, an organic filler, metal powder, a pigment, a foil-like material, a softener, an age resistor, a conductive agent, a UV absorber, an antioxidant, a light stabilizer, a surface lubricant, a leveling agent, a corrosion inhibitor, a heat stabilizer, a polymerization inhibitor, a lubricant, a solvent, and a catalyst.

### (7-2-1-1-2. Urethane-based Resin formed of Composition containing Urethane Prepolymer (C) and Polyfunctional Isocyanate Compound (B))

Any appropriate urethane-based resin may be adopted as the urethane-based resin formed of the composition containing the urethane prepolymer (C) and the polyfunctional isocyanate compound (B) as long as the urethane-based resin is obtained by using a so-called "urethane prepolymer" as a raw material.

The urethane-based resin formed of the composition containing the urethane prepolymer (C) and the polyfunctional isocyanate compound (B) is, for example, a urethane-based resin formed of a composition containing a polyurethane polyol serving as the urethane prepolymer (C) and the polyfunctional isocyanate compound (B). The number of kinds of the urethane prepolymers (C) may be only one, or may be two or more. The number of kinds of the polyfunctional isocyanate compounds (B) may be only one, or may be two or more.

The polyurethane polyol serving as the urethane prepolymer (C) is preferably obtained by causing each of a polyester polyol (a1) and a polyether polyol (a2) alone, or a mixture of the polyols (a1) and (a2), to react with an organic polyisocyanate compound (a3) in the presence of a catalyst or in the absence of any catalyst.

Any appropriate polyester polyol may be used as the polyester polyol (a1). Such polyester polyol (a1) is, for example, a polyester polyol obtained by causing an acid component and a glycol component to react with each other. Examples of the acid component include terephthalic acid, adipic acid, azelaic acid, sebacic acid, phthalic anhydride, isophthalic acid, and trimellitic acid. Examples of the glycol component include ethylene glycol, propylene glycol, diethylene glycol, butylene glycol, 1,6-hexane glycol, 3-methyl-1,5-pentanediol, 3,3'-dimethylolheptane, polyoxyethylene glycol, polyoxypropylene glycol, 1,4-butanediol, neopentyl glycol, butylethylpentanediol, and glycerin, trimethylolpropane, or pentaerythritol serving as a polyol component. Other examples of the polyester polyol (a1) include polyester polyols obtained by subjecting lactones, such as polycaprolactone, poly(β-methyl-γ-valerolactone), and polyvalerolactone, to ring-opening polymerization.

Any value in the range of from a low molecular weight to a high molecular weight may be used as the molecular weight of the polyester polyol (a1). The molecular weight of the polyester polyol (a1) is preferably from 100 to 100,000 in terms of number-average molecular weight. When the number-average molecular weight is less than 100, there is a risk in that the reactivity of the polyol becomes higher, and hence the polyol is liable to gel. When the number-average molecular weight is more than 100,000, there is a risk in that the reactivity reduces, and the cohesive strength of the polyurethane polyol itself reduces. The usage amount of the polyester polyol (a1) is preferably from 0 mol% to 90 mol% in the polyols forming the polyurethane polyol.

Any appropriate polyether polyol may be used as the polyether polyol (a2). Such polyether polyol (a2) is, for example, a polyether polyol obtained by polymerizing an oxirane compound, such as ethylene oxide, propylene oxide, butylene oxide, or tetrahydrofuran, through the use of water or a low-molecular weight polyol, such as propylene glycol, ethylene glycol, glycerin, or trimethylolpropane, as an initiator. Such polyether polyol (a2) is specifically, for example, a polyether polyol having 2 or more functional groups, such as polypropylene glycol, polyethylene glycol, or polytetramethylene glycol.

Any value in the range of from a low molecular weight to a high molecular weight may be used as the molecular weight of the polyether polyol (a2). The molecular weight of the polyether polyol (a2) is preferably from 100 to 100,000 in terms of number-average molecular weight. When the number-average molecular weight is less than 100, there is a risk in that the reactivity of the polyol becomes higher, and hence the polyol is liable to gel. When the number-average molecular weight is more than 100,000, there is a risk in that the reactivity reduces, and the cohesive strength of the polyurethane polyol itself reduces. The usage amount of the polyether polyol (a2) is preferably from 0 mol% to 90 mol% in the polyols forming the polyurethane polyol.

A product obtained by substituting part of the polyether polyol (a2) with, for example, a glycol, such as ethylene glycol, 1,4-butanediol, neopentyl glycol, butylethylpentanediol, glycerin, trimethylolpropane, or pentaerythritol, or a polyvalent amine, such as ethylenediamine, N-aminoethylethanolamine, isophoronediamine, or xylylenediamine, as required may be used in combination.

Only a bifunctional polyether polyol may be used as the polyether polyol (a2), or part or the entirety of a polyether polyol having a number-average molecular weight of from 100 to 100,000 and having at least 3 hydroxy groups in a molecule thereof may be used. When part or the entirety of the polyether polyol having a number-average molecular weight of from 100 to 100,000 and having at least 3 hydroxy groups in a molecule thereof is used as the polyether polyol (a2), a balance between the pressure-sensitive adhesive strength and re-peelability of the pressure-sensitive adhesive layer can become satisfactory. When the number-average molecular weight in such polyether polyol is less than 100, there is a risk in that its reactivity becomes higher, and hence the polyol is liable to gel. In addition, when the number-average molecular weight in such polyether polyol is more than 100,000, there is a risk in that the reactivity reduces, and the cohesive strength of the polyurethane polyol itself reduces. The number-average molecular weight of such polyether polyol is more preferably from 100 to 10,000.

Any appropriate polyisocyanate compound may be used as the organic polyisocyanate compound (a3). Examples of such organic polyisocyanate compound (a3) include an aromatic polyisocyanate, an aliphatic polyisocyanate, an aromatic aliphatic polyisocyanate, and an alicyclic polyisocyanate.

Examples of the aromatic polyisocyanate include 1,3-phenylene diisocyanate, 4,4'-diphenyl diisocyanate, 1,4-phenylene diisocyanate, 4,4'-diphenylmethane diisocyanate, 2,4-tolylene diisocyanate, 2,6-tolylene diisocyanate, 4,4'-toluidine diisocyanate, 2,4,6-triisocyanatotoluene, 1,3,5-triisocyanatobenzene, dianisidine diisocyanate, 4,4'-diphenyl ether diisocyanate, and 4,4',4"-triphenylmethane triisocyanate.

Examples of the aliphatic polyisocyanate include trimethylene diisocyanate, tetramethylene diisocyanate, hexamethylene diisocyanate, pentamethylene diisocyanate, 1,2-propylene diisocyanate, 2,3-butylene diisocyanate, 1,3-butylene diisocyanate, dodecamethylene diisocyanate, and 2,4,4-trimethylhexamethylene diisocyanate.

Examples of the aromatic aliphatic polyisocyanate include ω,ω'-diisocyanato-1,3-dimethylbenzene, ω,ω'-diisocyanato-1,4-dimethylbenzene, ω,ω'-diisocyanato-1,4-diethylbenzene, 1,4-tetramethylxylylene diisocyanate, and 1,3-tetramethylxylylene diisocyanate.

Examples of the alicyclic polyisocyanate include 3-isocyanatomethyl-3,5,5-trimethylcyclohexyl isocyanate, 1,3-cyclopentane diisocyanate, 1,3-cyclohexane diisocyanate, 1,4-cyclohexanediisocyanate, methyl-2,4-cyclohexane diisocyanate, methyl-2,6-cyclohexane diisocyanate, 4,4'-methylenebis(cyclohexyl isocyanate), 1,4-bis(isocyanatomethyl)cyclohexane, and 1,4-bis(isocyanatomethyl)cyclohexane.

A trimethylolpropane adduct of any such compound as described above, a biuret thereof formed by a reaction with water, a trimer thereof having an isocyanurate ring, or the like may be used as the organic polyisocyanate compound (a3) in combination with the above-mentioned compound.

Any appropriate catalyst may be used as a catalyst that may be used in obtaining the polyurethane polyol. Examples of such catalyst include a tertiary amine-based compound and an organometallic compound.

Examples of the tertiary amine-based compound include triethylamine, triethylenediamine, and 1,8-diazabicyclo(5,4,0)-undecene-7 (DBU).

Examples of the organometallic compound include a tin-based compound and a non-tin-based compound.

Examples of the tin-based compound include dibutyltin dichloride, dibutyltin oxide, dibutyltin dibromide, dibutyltin dimaleate, dibutyltin dilaurate (DBTDL), dibutyltin diacetate, dibutyltin sulfide, tributyltin sulfide, tributyltin oxide, tributyltin acetate, triethyltin ethoxide, tributyltin ethoxide, dioctyltin oxide, tributyltin chloride, tributyltin trichloroacetate, and tin 2-ethylhexanoate.

Examples of the non-tin-based compound include: titanium-based compounds, such as dibutyltitanium dichloride, tetrabutyl titanate, and butoxytitanium trichloride; lead-based compounds, such as lead oleate, lead 2-ethylhexanoate, lead benzoate, and lead naphthenate; iron-based compounds, such as iron 2-ethylhexanoate and iron acetylacetonate; cobalt-based compounds, such as cobalt benzoate and cobalt 2-ethylhexanoate; zinc-based compounds, such as zinc naphthenate and zinc 2-ethylhexanoate; and zirconium-based compounds, such as zirconium naphthenate.

When the catalyst is used in obtaining the polyurethane polyol, in a system where the two kinds of polyols, that is, the polyester polyol and the polyether polyol are present, a single catalyst system is liable to cause a problem in that the polyols gel or a reaction solution becomes cloudy owing to a difference in reactivity between the polyols. In view of the foregoing, when two kinds of catalysts are used in obtaining the polyurethane polyol, it becomes easier to control a reaction rate, the selectivity of the catalysts, and the like, and hence such problem can be solved. Examples of the combination of such two kinds of catalysts include: the combination of a tertiary amine-based compound and an organometallic compound; the combination of a tin-based compound and a non-tin-based compound; and the combination of a tin-based compound and another tin-based compound. Of those, the combination of a tin-based compound and another tin-based compound is preferred, and the combination of dibutyltin dilaurate and tin 2-ethylhexanoate is more preferred. A compounding ratio "tin 2-ethylhexanoate/dibutyltin dilaurate" is preferably less than 1, more preferably from 0.2 to 0.6 in terms of weight ratio . When the compounding ratio is 1 or more, the polyols may be liable to gel owing to a poor balance between the catalytic activities of the catalysts.

When the catalyst is used in obtaining the polyurethane polyol, the usage amount of the catalyst is preferably from 0.01 wt% to 1.0 wt% with respect to the total amount of the polyester polyol (a1), the polyether polyol (a2), and the organic polyisocyanate compound (a3).

When the catalyst is used in obtaining the polyurethane polyol, a reaction temperature is preferably less than 100°C, more preferably from 85°C to 95°C. When the temperature is 100°C or more, it may be difficult to control the reaction rate and the cross-linked structure of the polyurethane polyol, and hence a polyurethane polyol having a predetermined molecular weight may be hardly obtained.

No catalyst may be used in obtaining the polyurethane polyol. In that case, the reaction temperature is preferably 100°C or more, more preferably 110°C or more. In addition, when the polyurethane polyol is obtained in the absence of any catalyst, the polyols (a1) and (a2), and the compound (a3) are preferably caused to react with each other for 3 hours or more.

A method of obtaining the polyurethane polyol is, for example, (1) a method involving loading the total amount of the polyester polyol, the polyether polyol, the catalyst, and the organic polyisocyanate compound into a flask, or (2) a method involving loading the polyester polyol, the polyether polyol, and the catalyst into a flask, and adding dropwise the organic polyisocyanate compound to the mixture. Of those, the method (2) is preferred as a method of obtaining the polyurethane polyol in terms of the control of the reaction.

Any appropriate solvent may be used in obtaining the polyurethane polyol. Examples of such solvent include methyl ethyl ketone, ethyl acetate, toluene, xylene, and acetone. Of those solvents, toluene is preferred.

Any such compound as described in the foregoing may be used as the polyfunctional isocyanate compound (B).

Any appropriate other component may be incorporated into the composition containing the urethane prepolymer (C) and the polyfunctional isocyanate compound (B) to the extent that the effect of the present invention is not impaired. Examples of such other component include a resin component except the polyurethane-based resin, a tackifier, an inorganic filler, an organic filler, metal powder, a pigment, a foil-like material, a softener, an age resistor, a conductive agent, a UV absorber, an antioxidant, a light stabilizer, a surface lubricant, a leveling agent, a corrosion inhibitor, a heat stabilizer, a polymerization inhibitor, a lubricant, a solvent, and a catalyst.

Any appropriate production method may be adopted as a method of producing the urethane-based resin formed of the composition containing the urethane prepolymer (C) and the polyfunctional isocyanate compound (B) as long as the method involves producing theurethane-based resin through the use of a so-called "urethane prepolymer" as a raw material.

The number-average molecular weight Mn of the urethane prepolymer (C) is preferably from 3,000 to 1,000,000.

An equivalent ratio "NCO group/OH group" between an NCO group and a OH group in the urethane prepolymer (C) and the polyfunctional isocyanate compound (B) is preferably 5.0 or less, more preferably from 0.01 to 3.0, still more preferably from 0.02 to 2.5, particularly preferably from 0.03 to 2.25, most preferably from 0.05 to 2.0. When the equivalent ratio "NCO group/OH group" is adjusted within the range, the effect of the present invention can be further expressed.

The content ratio of the polyfunctional isocyanate compound (B) is preferably from 0.01 wt% to 30 wt%, more preferably from 0.03 wt% to 20 wt%, still more preferably from 0.05 wt% to 15 wt%, particularly preferably from 0.075 wt% to 10 wt%, most preferably from 0.1 wt% to 8 wt% with respect to the urethane prepolymer (C) . When the content ratio of the polyfunctional isocyanate compound (B) is adjusted within the range, the effect of the present invention can be further expressed.

### [7-2-1-2. Acrylic Resin]

Any appropriate acrylic pressure-sensitive adhesive, such as a known acrylic pressure-sensitive adhesive described in JP 2013-241606 A or JP 2015-28134 A, may be adopted as the acrylic resin to the extent that the effect of the present invention is not impaired.

The pressure-sensitive adhesive composition preferably contains a (meth) acrylic polymer (A), which is obtained from a monomer composition (a) containing 50 wt% to 99.9 wt% of a (meth)acrylic monomer having an alkyl group having 1 to 14 carbon atoms, as the acrylic resin because the effect of the present invention can be further expressed. The number of kinds of the (meth) acrylic monomers each having an alkyl group having 1 to 14 carbon atoms may be only one, or may be two or more.

The content ratio of the (meth) acrylic monomer having an alkyl group having 1 to 14 carbon atoms in the monomer composition (a) is more preferably from 60 wt% to 99 wt%, still more preferably from 70 wt% to 98 wt%, particularly preferably from 80 wt% to 97 wt%.

Specific examples of the (meth) acrylic monomer having an alkyl group having 1 to 14 carbon atoms include methyl (meth)acrylate, ethyl (meth)acrylate, n-butyl (meth)acrylate, s-butyl (meth)acrylate, t-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, and n-tetradecyl (meth)acrylate.

The (meth) acrylic monomer having an alkyl group having 1 to 14 carbon atoms is preferably, for example, a (meth) acrylate having an alkyl group having 6 to 14 carbon atoms, such as hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, or n-tetradecyl (meth)acrylate, because the effect of the present invention can be further expressed.

The monomer composition (a) preferably contains a hydroxyl group-containing (meth)acrylic monomer because the effect of the present invention can be further expressed. Examples of the hydroxyl group-containing (meth)acrylic monomer include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol (meth)acrylamide, vinyl alcohol, allyl alcohol, 2-hydroxyethyl vinyl ether, 4-hydroxybutyl vinyl ether, and diethylene glycol monovinyl ether. The number of kinds of the hydroxyl group-containing (meth) acrylic monomers may be only one, or may be two or more.

The content ratio of the hydroxyl group-containing (meth) acrylic monomer in the monomer composition (a) is preferably 15 wt% or less, more preferably from 1 wt% to 13 wt%, still more preferably from 2 wt% to 11 wt%, most preferably from 3.5 wt% to 10 wt% because the effect of the present invention can be further expressed.

The monomer composition (a) may contain any appropriate other monomer component to the extent that the effect of the present invention is not impaired. The number of kinds of the other monomer components may be only one, or may be two or more. The content ratio of the other monomer component in the monomer composition (a) is preferably from 0 wt% to 40 wt%, more preferably from 0 wt% to 30 wt%, still more preferably from 0 wt% to 20 wt%, particularly preferably from 0 wt% to 10 wt% because the effect of the present invention can be further expressed.

Examples of such other monomer component include: cohesive strength and heat resistance-improving components, such as a carboxyl group-containing (meth)acrylic monomer (e.g., (meth) acrylic acid), a cyano group-containing monomer, a vinyl ester monomer, and an aromatic vinyl monomer; and an amide group-containing monomer, an imide group-containing monomer, an amino group-containing monomer, an epoxy group-containing monomer, N-acryloylmorpholine, and a vinyl ether monomer.

The weight-average molecular weight (Mw) of the (meth) acrylic polymer (A) is preferably from 100,000 to 5,000,000, more preferably from 200,000 to 4,000,000, still more preferably from 300,000 to 3,000,000, particularly preferably from 400,000 to 1,000,000 because the effect of the present invention can be further expressed. The weight-average molecular weight (Mw) is obtained through measurement by, for example, gel permeation chromatography (GPC).

The glass transition temperature (Tg) of the (meth)acrylic polymer (A) is preferably 0°C or less, more preferably -10°C or less because the effect of the present invention can be further expressed.

Any appropriate production method may be adopted as a method of producing the (meth) acrylic polymer (A) to the extent that the effect of the present invention is not impaired. Examples of such production method include solution polymerization, emulsion polymerization, bulk polymerization, and suspension polymerization.

The content ratio of the (meth)acrylic polymer (A) in the acrylic resin is preferably from 50 wt% to 99 wt%, more preferably from 60 wt% to 98 wt%, still more preferably from 70 wt% to 97 wt%, particularly preferably from 80 wt% to 96 wt% because the effect of the present invention can be further expressed.

The acrylic resin preferably contains a cross-linking agent because the effect of the present invention can be further expressed. The amount of the cross-linking agent is preferably from 0.90 part by weight to 10 parts by weight, more preferably from 1 part by weight to 8 parts by weight, still more preferably from 2 parts by weight to 6 parts by weight, particularly preferably from 2 parts by weight to 5 parts by weight with respect to 100 parts by weight (solid content) of the (meth)acrylic polymer (A).

Any appropriate cross-linking agent may be adopted as the cross-linking agent to the extent that the effect of the present invention is not impaired. Such cross-linking agent is preferably, for example, a trifunctional isocyanate cross-linking agent (compound) or a bifunctional isocyanate cross-linking agent (compound) because the effect of the present invention can be further expressed.

Examples of the trifunctional isocyanate cross-linking agent (compound) include a trimethylolpropane/tolylene diisocyanate trimer adduct, a trimethylolpropane/hexamethylene diisocyanate trimer adduct, an isocyanurate of hexamethylene diisocyanate, a biuret-modified product of hexamethylene diisocyanate, an allophanate-modified product of hexamethylene diisocyanate, and a uretdione-modified product of hexamethylene diisocyanate. As a commercial product thereof, there are given, for example, CORONATE L, CORONATE HL, and CORONATE HX (each of which is manufactured by Nippon Polyurethane Industry Co., Ltd.), TAKENATE D-165N and TAKENATE D-178N (each of which is manufactured by Mitsui Chemicals Inc.), and Desmodur N 3400 (manufactured by Sumika Bayer Urethane Co., Ltd.). The number of kinds of the trifunctional isocyanate cross-linking agents (compounds) may be only one, or may be two or more.

Examples of the bifunctional isocyanate cross-linking agent (compound) include: aliphatic polyisocyanates, such as trimethylene diisocyanate, butylene diisocyanate, hexamethylene diisocyanate (HDI), and dimer acid diisocyanate; aliphatic isocyanates, such as cyclopentylene diisocyanate, cyclohexylene diisocyanate, and isophorone diisocyanate (IPDI); aromatic isocyanates, such as 2,4-tolylene diisocyanate, 4,4'-diphenylmethane diisocyanate, xylylene diisocyanate (XDI), and 1,3-bis(isocyanatomethyl)benzene; and alicyclic isocyanates, such as 1,3-bis(isocyanatomethyl)cyclohexane. As a commercial product thereof, there are given, for example, TAKENATE 500 and TAKENATE 600 (each of which is manufactured by Mitsui Chemicals Inc.), and Millionate MT and CORONATE T (each of which is manufactured by Nippon Polyurethane Industry Co., Ltd.). The number of kinds of the bifunctional isocyanate cross-linking agents (compounds) may be only one, or may be two or more.

The acrylic resin may contain any appropriate component to the extent that the effect of the present invention is not impaired. Examples of such component include a resin component except the acrylic resin, a tackifier, an inorganic filler, an organic filler, metal powder, a pigment, a foil-like material, a softener, an age resistor, a conductive agent, a UV absorber, an antioxidant, a light stabilizer, a surface lubricant, a leveling agent, a corrosion inhibitor, a heat stabilizer, a polymerization inhibitor, a lubricant, a solvent, and a catalyst.

### [7-2-1-3. Rubber-based Resin]

Any appropriate rubber-based pressure-sensitive adhesive, such as a known rubber-based pressure-sensitive adhesive described in JP 2015-74771 A, may be adopted as the rubber-based resin to the extent that the effect of the present invention is not impaired. The number of kinds of those rubber-based resins may be only one, or may be two or more.

The rubber-based resin may contain any appropriate component to the extent that the effect of the present invention is not impaired. Examples of such component include a resin component except the rubber-based resin, a tackifier, an inorganic filler, an organic filler, metal powder, a pigment, a foil-like material, a softener, an age resistor, a conductive agent, a UV absorber, an antioxidant, a light stabilizer, a surface lubricant, a leveling agent, a corrosion inhibitor, a heat stabilizer, a polymerization inhibitor, a lubricant, a solvent, and a catalyst.

### [7-2-1-4. Silicone-based Resin]

Any appropriate silicone-based pressure-sensitive adhesive, such as a known silicone-based pressure-sensitive adhesive described in JP 2014-47280 A, may be adopted as the silicone-based pressure-sensitive adhesive to the extent that the effect of the present invention is not impaired. The number of kinds of those silicone-based resins may be only one, or may be two or more.

The silicone-based resin may contain any appropriate component to the extent that the effect of the present invention is not impaired. Examples of such component include a resin component except the silicone-based resin, a tackifier, an inorganic filler, an organic filler, metal powder, a pigment, a foil-like material, a softener, an age resistor, a conductive agent, a UV absorber, an antioxidant, a light stabilizer, a surface lubricant, a leveling agent, a corrosion inhibitor, a heat stabilizer, a polymerization inhibitor, a lubricant, a solvent, and a catalyst.

### <7-2-2. Silicone-based Additive>

Any appropriate silicone-based additive may be adopted as the silicone-based additive to the extent that the effect of the present invention is not impaired. Such silicone-based additive is preferably, for example, at least one kind selected from a siloxane bond-containing compound, a hydroxy group-containing silicone-based compound, and a cross-linkable functional group-containing silicone-based compound.

The number of kinds of the silicone-based additives may be only one, or may be two or more.

Examples of the siloxane bond-containing compound include: a polyether-modified polyorganosiloxane obtained by introducing a polyether group into the main chain of a polyorganosiloxane skeleton (e.g., polydimethylsiloxane) or a side chain thereof; a polyester-modified polyorganosiloxane obtained by introducing a polyester group into the main chain of a polyorganosiloxane skeleton or a side chain thereof; an organic compound-introduced polyorganosiloxane obtained by introducing an organic compound into the main chain of a polyorganosiloxane skeleton or a side chain thereof; a silicone-modified (meth)acrylic resin obtained by introducing a polyorganosiloxane into a (meth)acrylic resin; a silicone-modified organic compound obtained by introducing a polyorganosiloxane into an organic compound; and a silicone-containing organic compound obtained by copolymerizing an organic compound and a silicone compound. Examples of commercial products of such siloxane bond-containing polymer include a product available under the product name "LE-302" (manufactured by Kyoeisha Chemical Co., Ltd.), leveling agents "BYK series" manufactured by BYK Japan K.K. (e.g., "BYK-300", "BYK-301/302", "BYK-306", "BYK-307", "BYK-310", "BYK-315", "BYK-313", "BYK-320", "BYK-322", "BYK-323", "BYK-325", "BYK-330", "BYK-331", "BYK-333", "BYK-337", "BYK-341", "BYK-344", "BYK-345/346", "BYK-347", "BYK-348", "BYK-349", "BYK-370", "BYK-375", "BYK-377", "BYK-378", "BYK-UV 3500", "BYK-UV 3510", "BYK-UV 3570", "BYK-3550", "BYK-SILCLEAN 3700", and "BYK-SILCLEAN 3720"), leveling agents "AC series" manufactured by Algin-Chemie (e.g., "AC FS180", "AC FS360", and "AC S20"), leveling agents "POLYFLOW series" manufactured by Kyoeisha Chemical Co., Ltd. (e.g., "POLYFLOW KL-400X", "POLYFLOW KL-400HF", "POLYFLOW KL-401", "POLYFLOW KL-402", "POLYFLOW KL-403", and "POLYFLOW KL-404"), leveling agents "KP series" manufactured by Shin-Etsu Chemical Co., Ltd. (e.g., "KP-323", "KP-326", "KP-341", "KP-104", "KP-110", and "KP-112"), "X22 series" and "KF series" manufactured by Shin-Etsu Chemical Co., Ltd., and leveling agents manufactured by Dow Corning Toray Co., Ltd. (e.g., "LP-7001", "LP-7002", "8032 ADDITIVE", "57 ADDITIVE", "L-7604", "FZ-2110", "FZ-2105", "67 ADDITIVE", "8618 ADDITIVE", "3 ADDITIVE", and "56 ADDITIVE").

Examples of the hydroxy group-containing silicone-based compound include: a polyether-modified polyorganosiloxane obtained by introducing a polyether group into the main chain of a polyorganosiloxane skeleton (e.g., polydimethylsiloxane) or a side chain thereof; a polyester-modified polyorganosiloxane obtained by introducing a polyester group into the main chain of a polyorganosiloxane skeleton or a side chain thereof; an organic compound-introduced polyorganosiloxane obtained by introducing an organic compound into the main chain of a polyorganosiloxane skeleton or a side chain thereof; a silicone-modified (meth)acrylic resin obtained by introducing a polyorganosiloxane into a (meth)acrylic resin; a silicone-modified organic compound obtained by introducing a polyorganosiloxane into an organic compound; and a silicone-containing organic compound obtained by copolymerizing an organic compound and a silicone compound. In any such compound, the hydroxyl group may be included in the polyorganosiloxane skeleton, or may be included in the polyether group, the polyester group, the (meth)acryloyl group, or the organic compound. Examples of commercial products of such hydroxy group-containing silicone include products available under the product names "X-22-4015", "X-22-4039", "KF-6000", "KF-6001", "KF-6002", "KF-6003", "X-22-170BX", "X-22-170DX", "X-22-176DX", and "X-22-176F" (manufactured by Shin-Etsu Chemical Co., Ltd.), and "BYK-370", "BYK-SILCLEAN 3700", and "BYK-SILCLEAN 3720" manufactured by BYK Japan K.K.

Examples of the cross-linkable functional group-containing silicone-based compound include: a polyether-modified polyorganosiloxane obtained by introducing a polyether group into the main chain of a polyorganosiloxane skeleton (e.g., polydimethylsiloxane) or a side chain thereof; a polyester-modified polyorganosiloxane obtained by introducing a polyester group into the main chain of a polyorganosiloxane skeleton or a side chain thereof; an organic compound-introduced polyorganosiloxane obtained by introducing an organic compound into the main chain of a polyorganosiloxane skeleton or a side chain thereof; a silicone-modified (meth)acrylic resin obtained by introducing a polyorganosiloxane into a (meth)acrylic resin; a silicone-modified organic compound obtained by introducing a polyorganosiloxane into an organic compound; and a silicone-containing organic compound obtained by copolymerizing an organic compound and a silicone compound. In any such compound, the cross-linkable functional group maybe included in the polyorganosiloxane skeleton, or maybe included in the polyether group, the polyester group, the (meth)acryloyl group, or the organic compound. Examples of the cross-linkable functional group include an amino group, an epoxy group, a mercapto group, a carboxyl group, an isocyanate group, and a methacrylate group. Examples of commercial products of such isocyanate group-containing silicone include "BY16-855", "SF8413", "BY16-839", "SF8421", "BY16-750", "BY16-880", and "BY16-152C" manufactured by Dow Corning Toray Co., Ltd., and "KF-868", "KF-865", "KF-864", "KF-859", "KF-393", "KF-860", "KF-880", "KF-8004", "KF-8002", "KF-8005", "KF-867", "KF-8021", "KF-869", "KF-861", "X-22-343", "KF-101", "X-22-2000", "X-22-4741", "KF-1002", "KF-2001", "X-22-3701E", "X-22-164", "X-22-164A", "X-22-164B", "X-22-164AS", and "X-22-2445" manufactured by Shin-Etsu Chemical Co., Ltd.

### <7-2-3. Fluorine-based Additive>

Any appropriate fluorine-based additive may be adopted as the fluorine-based additive to the extent that the effect of the present invention is not impaired. Such fluorine-based additive is preferably, for example, at least one kind selected from a fluorine-containing compound, a hydroxy group-containing fluorine-based compound, and a cross-linkable functional group-containing fluorine-based compound.

The number of kinds of the fluorine-based additives may be only one, or may be two or more.

Examples of the fluorine-containing compound include a compound having a fluoroaliphatic hydrocarbon skeleton, a fluorine-containing organic compound obtained by copolymerizing an organic compound and a fluorine compound, and a fluorine-containing compound having an organic compound. Examples of the fluoroaliphatic hydrocarbon skeleton include fluoro-C1-C10 alkanes, such as fluoromethane, fluoroethane, fluoropropane, fluoroisopropane, fluorobutane, fluoroisobutane, fluoro-t-butane, fluoropentane, and fluorohexane. Examples of commercial products of such fluorine-containing compound include leveling agents "Surflon series" manufactured by AGC Seimi Chemical Co., Ltd. (e.g., "S-242", "S-243", "S-420", "S-611", "S-651", and "S-386"), leveling agents "BYK series " manufactured by BYK Japan K.K. (e.g., "BYK-340"), leveling agents "AC series" manufactured by Algin-Chemie (e.g., "AC 110a" and "AC 100a"), leveling agents "MEGAFACE series" manufactured by DIC Corporation (e.g., "MEGAFACE F-114", "MEGAFACE F-410", "MEGAFACE F-444", "MEGAFACE EXPTP-2066", "MEGAFACE F-430", "MEGAFACE F-472SF", "MEGAFACE F-477", "MEGAFACE F-552", "MEGAFACE F-553", "MEGAFACE F-554", "MEGAFACE F-555", "MEGAFACE R-94", "MEGAFACE RS-72-K", "MEGAFACE RS-75", "MEGAFACE F-556", "MEGAFACE EXP TF-1367", "MEGAFACE EXP TF-1437", "MEGAFACE F-558", and "MEGAFACE EXP TF-1537"), leveling agents "FC series" manufactured by Sumitomo 3M Limited (e.g., "FC-4430" and "FC-4432"), leveling agents "FTERGENT series" manufactured by Neos Company Limited (e.g., "FTERGENT 100", "FTERGENT 100C", "FTERGENT 110", "FTERGENT 150", "FTERGENT 150CH", "FTERGENT A-K", "FTERGENT 501", "FTERGENT 250", "FTERGENT 251", "FTERGENT 222F", "FTERGENT 208G", "FTERGENT 300", "FTERGENT 310", and "FTERGENT 400SW"), and leveling agents "PF series" manufactured by Kitamura Chemicals Co., Ltd. (e.g., "PF-136A", "PF-156A", "PF-151N", "PF-636", "PF-6320", "PF-656", "PF-6520", "PF-651", "PF-652", and "PF-3320").

For example, a conventionally known resin may be used as the hydroxy group-containing fluorine-based compound, and the resin is, for example, a hydroxy group-containing fluorine resin described in WO 94/06870 A1, JP 08-12921 A, JP 10-72569 A, JP 04-275379 A, WO97/11130A1, orWO96/26254A1. Any other hydroxy group-containing fluorine resin is, for example, a fluoroolefin copolymer described in JP 08-231919 A, JP 10-265731 A, JP 10-204374 A, or JP 08-12922 A. In addition to the foregoing, for example, a copolymer of a hydroxy group-containing compound and a compound having a fluorinated alkyl group, a fluorine-containing organic compound obtained by copolymerizing a hydroxy group-containing compound with a fluorine-containing compound, or a fluorine-containing compound containing a hydroxy group-containing organic compound is available. Examples of commercial products of such hydroxy group-containing fluorine-based compound include a product available under the product name "LUMIFLON" (manufactured by AGC Inc.), a product available under the product name "CEFRAL COAT" (manufactured by Central Glass Co., Ltd.), a product available under the product name "ZAFLON" (manufactured by Toagosei Co., Ltd.), a product available under the product name "ZEFFLE" (manufactured by Daikin Industries, Ltd.), and products available under the product names "MEGAFACE F-571" and "FLUONATE" (manufactured by DIC Corporation) .

Examples of the cross-linkable functional group-containing fluorine-based compound include: a carboxylic acid compound having a fluorinated alkyl group, such as perfluorooctanoic acid; a copolymer of a cross-linkable functional group-containing compound and a compound having a fluorinated alkyl group; a fluorine-containing organic compound obtained by copolymerizing a cross-linkable functional group-containing compound with a fluorine-containing compound; and a fluorine-containing compound containing a cross-linkable functional group-containing compound. Examples of commercial products of such cross-linkable functional group-containing fluorine-based compound include products available under the product names "MEGAFACE F-570", "MEGAFACE RS-55", "MEGAFACE RS-56", "MEGAFACE RS-72-K", "MEGAFACE RS-75", "MEGAFACE RS-76-E", "MEGAFACE RS-76-NS", "MEGAFACE RS-78", and "MEGAFACE RS-90" (manufactured by DIC Corporation).

### <7-2-4. Other Component>

The pressure-sensitive adhesive composition may contain any appropriate other component to the extent that the effect of the present invention is not impaired. Examples of such other component include other resin components, a tackifier, an inorganic filler, an organic filler, metal powder, a pigment, a foil-like material, a softener, an age resistor, a conductive agent, a UV absorber, an antioxidant, a light stabilizer, a surface lubricant, a leveling agent, a corrosion inhibitor, a heat stabilizer, a polymerization inhibitor, a lubricant, a solvent, and a catalyst.

The pressure-sensitive adhesive composition may contain a fatty acid ester. The number of kinds of the fatty acid esters may be only one, or may be two or more.

The number-average molecular weight Mn of the fatty acid ester is preferably from 100 to 800, more preferably from 150 to 500, still more preferably from 200 to 480, particularly preferably from 200 to 400, most preferably from 250 to 350. When the number-average molecular weight Mn of the fatty acid ester is adjusted within the range, the wettability of the pressure-sensitive adhesive layer can be improved.

Any appropriate fatty acid ester may be adopted as the fatty acid ester to the extent that the effect of the present invention is not impaired. Examples of such fatty acid ester include polyoxyethylene bisphenol A lauric acid ester, butyl stearate, 2-ethylhexyl palmitate, 2-ethylhexyl stearate, behenic acid monoglyceride, cetyl 2-ethylhexanoate, isopropyl myristate, isopropyl palmitate, cholesterylisostearate, lauryl methacrylate, coconut fatty acid methyl ester, methyl laurate, methyl oleate, methyl stearate, myristyl myristate, octyldodecyl myristate, pentaerythritol monooleate, pentaerythritol monostearate, pentaerythritol tetrapalmitate, stearyl stearate, isotridecyl stearate, 2-ethylhexanoic acid triglyceride, butyl laurate, and octyl oleate.

When the pressure-sensitive adhesive composition contains the fatty acid ester, the content ratio of the fatty acid ester is preferably from 1 part by weight to 50 parts by weight, more preferably from 1.5 parts by weight to 45 parts by weight, still more preferably from 2 parts by weight to 40 parts by weight, particularly preferably from 2.5 parts by weight to 35 parts by weight, most preferably from 3 parts by weight to 30 parts by weight with respect to 100 parts by weight of the base polymer.

The pressure-sensitive adhesive composition may contain an ionic liquid containing a fluoroorganic anion. When the pressure-sensitive adhesive composition contains the ionic liquid containing the fluoroorganic anion, a pressure-sensitive adhesive composition extremely excellent in antistatic property can be provided. The number of kinds of such ionic liquids may be only one, or may be two or more.

In the present invention, the term "ionic liquid" means a molten salt (ionic compound) that shows liquidity at 25°C.

Any appropriate ionic liquid may be adopted as the ionic liquid to the extent that the effect of the present invention is not impaired as long as the ionic liquid contains the fluoroorganic anion. Such ionic liquid is preferably an ionic liquid including the fluoroorganic anion and an onium cation. When the ionic liquid including the fluoroorganic anion and the onium cation is adopted as the ionic liquid, a pressure-sensitive adhesive composition extremely excellent in antistatic property can be provided.

Any appropriate onium cation may be adopted as the onium cation that may form the ionic liquid to the extent that the effect of the present invention is not impaired. Such onium cation is preferably at least one kind selected from a nitrogen-containing onium cation, a sulfur-containing onium cation, and a phosphorus-containing onium cation. When any such onium cation is selected, a pressure-sensitive adhesive composition extremely excellent in antistatic property can be provided.

The onium cation that may form the ionic liquid is preferably at least one kind selected from cations having structures represented by the general formulae (1) to (5).

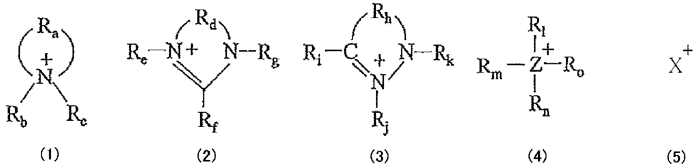

In the general formula (1), Ra represents a hydrocarbon group having 4 to 20 carbon atoms, and may contain a heteroatom, and Rb and Rc, which may be identical to or different from each other, each represent a hydrogen atom or a hydrocarbon group having 1 to 16 carbon atoms, and may each contain a heteroatom, provided that, when a nitrogen atom contains a double bond, Rc is absent.

In the general formula (2), Rd represents a hydrocarbon group having 2 to 20 carbon atoms, and may contain a heteroatom, and Re, Rf, and Rg, which may be identical to or different from each other, each represent a hydrogen atom or a hydrocarbon group having 1 to 16 carbon atoms, and may each contain a heteroatom.

In the general formula (3), Rh represents a hydrocarbon group having 2 to 20 carbon atoms, and may contain a heteroatom, and Ri, Rj, and Rk, which may be identical to or different from each other, each represent a hydrogen atom or a hydrocarbon group having 1 to 16 carbon atoms, and may each contain a heteroatom.

In the general formula (4), Z represents a nitrogen atom, a sulfur atom, or a phosphorus atom, and Rl, Rm, Rn, and Ro, which may be identical to or different from each other, each represent a hydrocarbon group having 1 to 20 carbon atoms, and may each contain a heteroatom, provided that, when Z represents a sulfur atom, Ro is absent.

In the general formula (5), X represents a Li atom, a Na atom, or a K atom.

Examples of the cation represented by the general formula (1) include a pyridinium cation, a pyrrolidinium cation, a piperidinium cation, a cation having a pyrroline skeleton, and a cation having a pyrrole skeleton.

Specific examples of the cation represented by the general formula (1) include: pyridinium cations, such as a 1-ethylpyridinium cation, a 1-butylpyridinium cation, a 1-hexylpyridinium cation, a 1-ethyl-3-methylpyridinium cation, a 1-butyl-3-methylpyridinium cation, a 1-hexyl-3-methylpyridinium cation, a 1-butyl-4-methylpyridinium cation, a 1-octyl-4-methylpyridinium cation, a 1-butyl-3,4-dimethylpyridinium cation, and a 1,1-dimethylpyrrolidinium cation; pyrrolidinium cations, such as a 1-ethyl-1-methylpyrrolidinium cation, a 1-methyl-1-propylpyrrolidinium cation, a 1-methyl-1-butylpyrrolidinium cation, a 1-methyl-1-pentylpyrrolidinium cation, a 1-methyl-1-hexylpyrrolidinium cation, a 1-methyl-1-heptylpyrrolidinium cation, a 1-ethyl-1-propylpyrrolidinium cation, a 1-ethyl-1-butylpyrrolidinium cation, a 1-ethyl-1-pentylpyrrolidinium cation, a 1-ethyl-1-hexylpyrrolidinium cation, a 1-ethyl-1-heptylpyrrolidinium cation, a 1,1-dipropylpyrrolidinium cation, a 1-propyl-1-butylpyrrolidinium cation, and a 1,1-dibutylpyrrolidinium cation; piperidinium cations, such as a 1-propylpiperidinium cation, a 1-pentylpiperidinium cation, a 1-methyl-1-ethylpiperidinium cation, a 1-methyl-1-propylpiperidinium cation, a 1-methyl-1-butylpiperidinium cation, a 1-methyl-1-pentylpiperidinium cation, a 1-methyl-1-hexylpiperidinium cation, a 1-methyl-1-heptylpiperidinium cation, a 1-ethyl-1-propylpiperidinium cation, a 1-ethyl-1-butylpiperidinium cation, a 1-ethyl-1-pentylpiperidinium cation, a 1-ethyl-1-hexylpiperidinium cation, a 1-ethyl-1-heptylpiperidinium cation, a 1-propyl-1-butylpiperidinium cation, a 1,1-dimethylpiperidinium cation, a 1,1-dipropylpiperidinium cation, and a 1,1-dibutylpiperidinium cation; a 2-methyl-1-pyrroline cation; a 1-ethyl-2-phenylindole cation; a 1,2-dimethylindole cation; and a 1-ethylcarbazole cation.

Of those, pyridinium cations, such as a 1-ethylpyridinium cation, a 1-butylpyridinium cation, a 1-hexylpyridinium cation, a 1-ethyl-3-methylpyridinium cation, a 1-butyl-3-methylpyridinium cation, a 1-hexyl-3-methylpyridinium cation, a 1-butyl-4-methylpyridinium cation, and a 1-octyl-4-methylpyridinium cation, pyrrolidinium cations, such as a 1-ethyl-1-methylpyrrolidinium cation, a 1-methyl-1-propylpyrrolidinium cation, a 1-methyl-1-butylpyrrolidinium cation, a 1-methyl-1-pentylpyrrolidinium cation, a 1-methyl-1-hexylpyrrolidinium cation, a 1-methyl-1-heptylpyrrolidinium cation, a 1-ethyl-1-propylpyrrolidinium cation, a 1-ethyl-1-butylpyrrolidinium cation, a 1-ethyl-1-pentylpyrrolidinium cation, a 1-ethyl-1-hexylpyrrolidinium cation, and a 1-ethyl-1-heptylpyrrolidinium cation, piperidinium cations, such as a 1-methyl-1-ethylpiperidinium cation, a 1-methyl-1-propylpiperidinium cation, a 1-methyl-1-butylpiperidinium cation, a 1-methyl-1-pentylpiperidinium cation, a 1-methyl-1-hexylpiperidinium cation, a 1-methyl-1-heptylpiperidinium cation, a 1-ethyl-1-propylpiperidinium cation, a 1-ethyl-1-butylpiperidinium cation, a 1-ethyl-1-pentylpiperidinium cation, a 1-ethyl-1-hexylpiperidinium cation, a 1-ethyl-1-heptylpiperidinium cation, and a 1-propyl-1-butylpiperidinium cation, and the like are preferred, and a 1-hexylpyridinium cation, a1-ethyl-3-methylpyridinium cation, a 1-butyl-3-methylpyridinium cation, a 1-octyl-4-methylpyridinium cation, a 1-methyl-1-propylpyrrolidinium cation, and a 1-methyl-1-propylpiperidinium cation are more preferred because the effect of the present invention can be further expressed.

Examples of the cation represented by the general formula (2) include an imidazolium cation, a tetrahydropyrimidinium cation, and a dihydropyrimidinium cation.

Specific examples of the cation represented by the general formula (2) include: imidazolium cations, such as a 1,3-dimethylimidazolium cation, a 1,3-diethylimidazolium cation, a 1-ethyl-3-methylimidazolium cation, a 1-butyl-3-methylimidazolium cation, a1-hexyl-3-methylimidazolium cation, a 1-octyl-3-methylimidazolium cation, a 1-decyl-3-methylimidazolium cation, a 1-dodecyl-3-methylimidazolium cation, a 1-tetradecyl-3-methylimidazolium cation, a 1,2-dimethyl-3-propylimidazolium cation, a 1-ethyl-2,3-dimethylimidazolium cation, a 1-butyl-2,3-dimethylimidazolium cation, and a 1-hexyl-2,3-dimethylimidazolium cation; tetrahydropyrimidinium cations, such as a 1,3-dimethyl-1,4,5,6-tetrahydropyrimidinium cation, a 1,2,3-trimethyl-1,4,5,6-tetrahydropyrimidinium cation, a 1,2,3,4-tetramethyl-1,4,5,6-tetrahydropyrimidinium cation, and a 1,2,3,5-tetramethyl-1,4,5,6-tetrahydropyrimidinium cation; and dihydropyrimidinium cations, such as a 1,3-dimethyl-1,4-dihydropyrimidinium cation, a 1,3-dimethyl-1,6-dihydropyrimidinium cation, a 1,2,3-trimethyl-1,4-dihydropyrimidinium cation, a 1,2,3-trimethyl-1,6-dihydropyrimidinium cation, a 1,2,3,4-tetramethyl-1,4-dihydropyrimidinium cation, and a 1,2,3,4-tetramethyl-1,6-dihydropyrimidinium cation.

Of those, imidazolium cations, such as a 1,3-dimethylimidazolium cation, a 1,3-diethylimidazolium cation, a 1-ethyl-3-methylimidazolium cation, a 1-butyl-3-methylimidazolium cation, a1-hexyl-3-methylimidazolium cation, a 1-octyl-3-methylimidazolium cation, a 1-decyl-3-methylimidazolium cation, a 1-dodecyl-3-methylimidazolium cation, and a 1-tetradecyl-3-methylimidazolium cation, are preferred, and a 1-ethyl-3-methylimidazolium cation and a 1-hexyl-3-methylimidazolium cation are more preferred because the effect of the present invention can be further expressed.

Examples of the cation represented by the general formula (3) include a pyrazolium cation and a pyrazolinium cation.

Specific examples of the cation represented by the general formula (3) include: pyrazolium cations, such as a 1-methylpyrazolium cation, a 3-methylpyrazolium cation, a 1-ethyl-2-methylpyrazolinium cation, a 1-ethyl-2,3,5-trimethylpyrazolium cation, a 1-propyl-2,3,5-trimethylpyrazolium cation, and a 1-butyl-2,3,5-trimethylpyrazolium cation; and pyrazolinium cations, such as a 1-ethyl-2,3,5-trimethylpyrazolinium cation, a 1-propyl-2,3,5-trimethylpyrazolinium cation, and a 1-butyl-2,3,5-trimethylpyrazolinium cation.

Examples of the cation represented by the general formula (4) include a tetraalkylammonium cation, a trialkylsulfonium cation, a tetraalkylphosphonium cation, and cations obtained by substituting a part of alkyl groups thereof with an alkenyl group, an alkoxyl group, or an epoxy group.

Specific examples of the cation represented by the general formula (4) include a tetramethylammonium cation, a tetraethylammonium cation, a tetrabutylammonium cation, a tetrapentylammonium cation, a tetrahexylammonium cation, a tetraheptylammonium cation, a triethylmethylammonium cation, a tributylethylammonium cation, a trimethylpropylammonium cation, a trimethyldecylammonium cation, an N,N-diethyl-N-methyl-N-(2-methoxyethyl)ammonium cation, a glycidyltrimethylammonium cation, a trimethylsulfonium cation, a triethylsulfonium cation, a tributylsulfonium cation, a trihexylsulfonium cation, a diethylmethylsulfonium cation, a dibutylethylsulfonium cation, a dimethyldecylsulfonium cation, a tetramethylphosphonium cation, a tetraethylphosphonium cation, a tetrabutylphosphonium cation, a tetrahexylphosphonium cation, a tetraoctylphosphonium cation, a triethylmethylphosphonium cation, a tributylethylphosphonium cation, a trimethyldecylphosphonium cation, and a diallyldimethylammonium cation.

Of those, asymmetric tetraalkylammonium cations, trialkylsulfonium cations, and tetraalkylphosphonium cations, such as a triethylmethylammonium cation, a tributylethylammonium cation, a trimethyldecylammonium cation, a diethylmethylsulfonium cation, a dibutylethylsulfonium cation, a dimethyldecylsulfonium cation, a triethylmethylphosphonium cation, a tributylethylphosphonium cation, and a trimethyldecylphosphonium cation, an N,N-diethyl-N-methyl-N-(2-methoxyethyl)ammonium cation, a glycidyltrimethylammonium cation, a diallyldimethylammonium cation, an N,N-dimethyl-N-ethyl-N-propylammonium cation, an N,N-dimethyl-N-ethyl-N-butylammonium cation, an N,N-dimethyl-N-ethyl-N-pentylammonium cation, an N,N-dimethyl-N-ethyl-N-hexylammonium cation, an N,N-dimethyl-N-ethyl-N-heptylammonium cation, an N,N-dimethyl-N-ethyl-N-nonylammonium cation, an N,N-dimethyl-N,N-dipropylammonium cation, an N,N-diethyl-N-propyl-N-butylammonium cation, an N,N-dimethyl-N-propyl-N-pentylammonium cation, an N,N-dimethyl-N-propyl-N-hexylammonium cation, an N,N-dimethyl-N-propyl-N-heptylammonium cation, an N,N-dimethyl-N-butyl-N-hexylammonium cation, an N,N-diethyl-N-butyl-N-heptylammonium cation, an N,N-dimethyl-N-pentyl-N-hexylammonium cation, an N,N-dimethyl-N,N-dihexylammonium cation, a trimethylheptylammonium cation, an N,N-diethyl-N-methyl-N-propylammonium cation, an N,N-diethyl-N-methyl-N-pentylammonium cation, an N,N-diethyl-N-methyl-N-heptylammonium cation, an N,N-diethyl-N-propyl-N-pentylammonium cation, a triethylpropylammonium cation, a triethylpentylammonium cation, a triethylheptylammonium cation, an N,N-dipropyl-N-methyl-N-ethylammonium cation, an N,N-dipropyl-N-methyl-N-pentylammonium cation, an N,N-dipropyl-N-butyl-N-hexylammonium cation, an N,N-dipropyl-N,N-dihexylammonium cation, an N,N-dibutyl-N-methyl-N-pentylammonium cation, an N,N-dibutyl-N-methyl-N-hexylammonium cation, a trioctylmethylammonium cation, an N-methyl-N-ethyl-N-propyl-N-pentylammonium cation, and the like are preferred, and a trimethylpropylammonium cation is more preferred because the effect of the present invention can be further expressed.

Any appropriate fluoroorganic anion may be adopted as the fluoroorganic anion that may form the ionic liquid to the extent that the effect of the present invention is not impaired. Such fluoroorganic anion may be completely fluorinated (perfluorinated), or may be partially fluorinated.

Examples of such fluoroorganic anion include a fluorinated aryl sulfonate, a perfluoroalkanesulfonate, bis(fluorosulfonyl)imide, a bis(perfluoroalkanesulfonyl)imide, a cyanoperfluoroalkanesulfonylamide, a bis(cyano)perfluoroalkanesulfonylmethide, a cyano-bis-(perfluoroalkanesulfonyl)methide, a tris(perfluoroalkanesulfonyl)methide, trifluoroacetate, a perfluoroalkylate, a tris(perfluoroalkanesulfonyl)methide, and a (perfluoroalkanesulfonyl)trifluoroacetamide.

Of those fluoroorganic anions, a perfluoroalkyl sulfonate, bis(fluorosulfonyl)imide, and a bis(perfluoroalkanesulfonyl)imide are more preferred, and more specific examples thereof include trifluoromethanesulfonate, pentafluoroethanesulfonate, heptafluoropropanesulfonate, nonafluorobutanesulfonate, bis(fluorosulfonyl)imide, and bis(trifluoromethanesulfonyl)imide.

As a specific example of the ionic liquid, an ionic liquid appropriately selected from the combinations of the cation components and the anion components may be used. Specific examples of such ionic liquid include 1-hexylpyridinium bis(fluorosulfonyl)imide, 1-ethyl-3-methylpyridinium trifluoromethanesulfonate, 1-ethyl-3-methylpyridinium pentafluoroethanesulfonate, 1-ethyl-3-methylpyridinium heptafluoropropanesulfonate, 1-ethyl-3-methylpyridinium nonafluorobutanesulfonate, 1-butyl-3-methylpyridinium trifluoromethanesulfonate, 1-butyl-3-methylpyridinium bis(trifluoromethanesulfonyl)imide, 1-butyl-3-methylpyridinium bis(pentafluoroethanesulfonyl)imide, 1-octyl-4-methylpyridinium bis(fluorosulfonyl)imide, 1,1-dimethylpyrrolidinium bis(trifluoromethanesulfonyl)imide, 1-methyl-1-ethylpyrrolidinium bis(trifluoromethanesulfonyl)imide, 1-methyl-1-propylpyrrolidinium bis(trifluoromethanesulfonyl)imide, 1-methyl-1-propylpyrrolidinium bis(fluorosulfonyl)imide, 1-methyl-1-butylpyrrolidinium bis(trifluoromethanesulfonyl)imide, 1-methyl-1-pentylpyrrolidinium bis(trifluoromethanesulfonyl)imide, 1-methyl-1-hexylpyrrolidinium bis(trifluoromethanesulfonyl)imide, 1-methyl-1-heptylpyrrolidinium bis(trifluoromethanesulfonyl)imide, 1-ethyl-1-propylpyrrolidinium bis(trifluoromethanesulfonyl)imide, 1-ethyl-1-butylpyrrolidinium bis(trifluoromethanesulfonyl)imide, 1-ethyl-1-pentylpyrrolidinium bis(trifluoromethanesulfonyl)imide, 1-ethyl-1-hexylpyrrolidinium bis(trifluoromethanesulfonyl)imide, 1-ethyl-1-heptylpyrrolidinium bis(trifluoromethanesulfonyl)imide, 1,1-dipropylpyrrolidinium bis(trifluoromethanesulfonyl)imide, 1-propyl-1-butylpyrrolidinium bis(trifluoromethanesulfonyl)imide, 1,1-dibutylpyrrolidinium bis(trifluoromethanesulfonyl)imide, 1-propylpiperidinium bis(trifluoromethanesulfonyl)imide, 1-pentylpiperidinium bis(trifluoromethanesulfonyl)imide, 1,1-dimethylpiperidinium bis(trifluoromethanesulfonyl)imide, 1-methyl-1-ethylpiperidinium bis(trifluoromethanesulfonyl)imide, 1-methyl-1-propylpiperidinium bis(trifluoromethanesulfonyl)imide, 1-methyl-1-propylpiperidinium bis(fluorosulfonyl)imide, 1-methyl-1-butylpiperidinium bis(trifluoromethanesulfonyl)imide, 1-methyl-1-pentylpiperidinium bis(trifluoromethanesulfonyl)imide, 1-methyl-1-hexylpiperidinium bis(trifluoromethanesulfonyl)imide, 1-methyl-1-heptylpiperidinium bis(trifluoromethanesulfonyl)imide, 1-ethyl-1-propylpiperidinium bis(trifluoromethanesulfonyl)imide, 1-ethyl-1-butylpiperidinium bis(trifluoromethanesulfonyl)imide, 1-ethyl-1-pentylpiperidinium bis(trifluoromethanesulfonyl)imide, 1-ethyl-1-hexylpiperidinium bis(trifluoromethanesulfonyl)imide, 1-ethyl-1-heptylpiperidinium bis(trifluoromethanesulfonyl)imide, 1,1-dipropylpiperidinium bis(trifluoromethanesulfonyl)imide, 1-propyl-1-butylpiperidinium bis(trifluoromethanesulfonyl)imide, 1,1-dibutylpiperidinium bis(trifluoromethanesulfonyl)imide, 1,1-dimethylpyrrolidinium bis(pentafluoroethanesulfonyl)imide, 1-methyl-1-ethylpyrrolidinium bis(pentafluoroethanesulfonyl)imide, 1-methyl-1-propylpyrrolidinium bis(pentafluoroethanesulfonyl)imide, 1-methyl-1-butylpyrrolidinium bis(pentafluoroethanesulfonyl)imide, 1-methyl-1-pentylpyrrolidinium bis(pentafluoroethanesulfonyl)imide, 1-methyl-1-hexylpyrrolidinium bis(pentafluoroethanesulfonyl)imide, 1-methyl-1-heptylpyrrolidinium bis(pentafluoroethanesulfonyl)imide, 1-ethyl-1-propylpyrrolidinium bis(pentafluoroethanesulfonyl)imide, 1-ethyl-1-butylpyrrolidinium bis(pentafluoroethanesulfonyl)imide, 1-ethyl-1-pentylpyrrolidinium bis(pentafluoroethanesulfonyl)imide, 1-ethyl-1-hexylpyrrolidinium bis(pentafluoroethanesulfonyl)imide, 1-ethyl-1-heptylpyrrolidinium bis(pentafluoroethanesulfonyl)imide, 1,1-dipropylpyrrolidinium bis(pentafluoroethanesulfonyl)imide, 1-propyl-1-butylpyrrolidinium bis(pentafluoroethanesulfonyl)imide, 1,1-dibutylpyrrolidinium bis(pentafluoroethanesulfonyl)imide, 1-propylpiperidinium bis(pentafluoroethanesulfonyl)imide, 1-pentylpiperidinium bis(pentafluoroethanesulfonyl)imide, 1,1-dimethylpiperidinium bis(pentafluoroethanesulfonyl)imide, 1-methyl-1-ethylpiperidinium bis(pentafluoroethanesulfonyl)imide, 1-methyl-1-propylpiperidinium bis(pentafluoroethanesulfonyl)imide, 1-methyl-1-butylpiperidinium bis(pentafluoroethanesulfonyl)imide, 1-methyl-1-pentylpiperidinium bis(pentafluoroethanesulfonyl)imide, 1-methyl-1-hexylpiperidinium bis(pentafluoroethanesulfonyl)imide, 1-methyl-1-heptylpiperidinium bis(pentafluoroethanesulfonyl)imide, 1-ethyl-1-propylpiperidinium bis(pentafluoroethanesulfonyl)imide, 1-ethyl-1-butylpiperidinium bis(pentafluoroethanesulfonyl)imide, 1-ethyl-1-pentylpiperidinium bis(pentafluoroethanesulfonyl)imide, 1-ethyl-1-hexylpiperidinium bis(pentafluoroethanesulfonyl)imide, 1-ethyl-1-heptylpiperidinium bis(pentafluoroethanesulfonyl)imide, 1,1-dipropylpiperidinium bis(pentafluoroethanesulfonyl)imide, 1-propyl-1-butylpiperidinium bis(pentafluoroethanesulfonyl)imide, 1,1-dibutylpiperidinium bis(pentafluoroethanesulfonyl)imide, 1-ethyl-3-methylimidazolium trifluoroacetate, 1-ethyl-3-methylimidazolium heptafluorobutyrate, 1-ethyl-3-methylimidazolium trifluoromethanesulfonate, 1-ethyl-3-methylimidazolium heptafluoropropanesulfonate, 1-ethyl-3-methylimidazolium nonafluorobutanesulfonate, 1-ethyl-3-methylimidazolium bis(trifluoromethanesulfonyl)imide, 1-ethyl-3-methylimidazolium bis(fluorosulfonyl)imide, 1-ethyl-3-methylimidazolium bis(pentafluoroethanesulfonyl)imide, 1-ethyl-3-methylimidazolium tris(trifluoromethanesulfonyl)methide, 1-butyl-3-methylimidazolium trifluoroacetate, 1-butyl-3-methylimidazolium heptafluorobutyrate, 1-butyl-3-methylimidazolium trifluoromethanesulfonate, 1-butyl-3-methylimidazolium perfluorobutanesulfonate, 1-butyl-3-methylimidazolium bis(trifluoromethanesulfonyl)imide, 1-hexyl-3-methylimidazolium trifluoromethanesulfonate, 1-hexyl-3-methylimidazolium bis(fluorosulfonyl)imide, 1,2-dimethyl-3-propylimidazolium bis(trifluoromethanesulfonyl)imide, 1-ethyl-2,3,5-trimethylpyrazolium bis(trifluoromethanesulfonyl)imide, 1-propyl-2,3,5-trimethylpyrazolium bis(trifluoromethanesulfonyl)imide, 1-butyl-2,3,5-trimethylpyrazolium bis(trifluoromethanesulfonyl)imide, 1-ethyl-2,3,5-trimethylpyrazolium bis(pentafluoroethanesulfonyl)imide, 1-propyl-2,3,5-trimethylpyrazolium bis(pentafluoroethanesulfonyl)imide, 1-butyl-2,3,5-trimethylpyrazolium bis(pentafluoroethanesulfonyl)imide, 1-ethyl-2,3,5-trimethylpyrazolium (trifluoromethanesulfonyl)trifluoroacetamide, 1-propyl-2,3,5-trimethylpyrazolium (trifluoromethanesulfonyl)trifluoroacetamide, 1-butyl-2,3,5-trimethylpyrazolium (trifluoromethanesulfonyl)trifluoroacetamide, trimethylpropylammonium bis(trifluoromethanesulfonyl)imide, N,N-dimethyl-N-ethyl-N-propylammonium bis(trifluoromethanesulfonyl)imide, N,N-dimethyl-N-ethyl-N-butylammonium bis(trifluoromethanesulfonyl)imide, N,N-dimethyl-N-ethyl-N-pentylammonium bis(trifluoromethanesulfonyl)imide, N,N-dimethyl-N-ethyl-N-hexylammonium bis(trifluoromethanesulfonyl)imide, N,N-dimethyl-N-ethyl-N-heptylammonium bis(trifluoromethanesulfonyl)imide, N,N-dimethyl-N-ethyl-N-nonylammonium bis(trifluoromethanesulfonyl)imide, N,N-dimethyl-N,N-dipropylammonium bis(trifluoromethanesulfonyl)imide, N,N-dimethyl-N-propyl-N-butylammonium bis(trifluoromethanesulfonyl)imide, N,N-dimethyl-N-propyl-N-pentylammonium bis(trifluoromethanesulfonyl)imide, N,N-dimethyl-N-propyl-N-hexylammonium bis(trifluoromethanesulfonyl)imide, N,N-dimethyl-N-propyl-N-heptylammonium bis(trifluoromethanesulfonyl)imide, N,N-dimethyl-N-butyl-N-hexylammonium bis(trifluoromethanesulfonyl)imide, N,N-dimethyl-N-butyl-N-heptylammonium bis(trifluoromethanesulfonyl)imide, N,N-dimethyl-N-pentyl-N-hexylammonium bis(trifluoromethanesulfonyl)imide, N,N-dimethyl-N,N-dihexylammonium bis(trifluoromethanesulfonyl)imide, trimethylheptylammonium bis(trifluoromethanesulfonyl)imide, N,N-diethyl-N-methyl-N-propylammonium bis(trifluoromethanesulfonyl)imide, N,N-diethyl-N-methyl-N-pentylammonium bis(trifluoromethanesulfonyl)imide, N,N-diethyl-N-methyl-N,N-heptylammonium bis(trifluoromethanesulfonyl)imide, N,N-diethyl-N-propyl-N-pentylammonium bis(trifluoromethanesulfonyl)imide, triethylpropylammonium bis(trifluoromethanesulfonyl)imide, triethylpentylammonium bis(trifluoromethanesulfonyl)imide, triethylheptylammonium bis(trifluoromethanesulfonyl)imide, N,N-dipropyl-N-methyl-N-ethylammonium bis(trifluoromethanesulfonyl)imide, N,N-dipropyl-N-methyl-N-pentylammonium bis(trifluoromethanesulfonyl)imide, N,N-dipropyl-N-butyl-N-hexylammonium bis(trifluoromethanesulfonyl)imide, N,N-dipropyl-N,N-dihexylammonium bis(trifluoromethanesulfonyl)imide, N,N-dibutyl-N-methyl-N-pentylammonium bis(trifluoromethanesulfonyl)imide, N,N-dibutyl-N-methyl-N-hexylammonium bis(trifluoromethanesulfonyl)imide, trioctylmethylammonium bis(trifluoromethanesulfonyl)imide, N-methyl-N-ethyl-N-propyl-N-pentylammonium bis(trifluoromethanesulfonyl)imide, 1-butylpyridinium (trifluoromethanesulfonyl)trifluoroacetamide, 1-butyl-3-methylpyridinium (trifluoromethanesulfonyl)trifluoroacetamide,1-ethyl-3-methyli midazolium (trifluoromethanesulfonyl)trifluoroacetamide, tetrahexylammonium bis(trifluoromethanesulfonyl)imide, diallyldimethylammonium trifluoromethanesulfonate, diallyldimethylammonium bis(trifluoromethanesulfonyl)imide, diallyldimethylammonium bis(pentafluoroethanesulfonyl)imide, N,N-diethyl-N-methyl-N-(2-methoxyethyl)ammonium trifluoromethanesulfonate, N,N-diethyl-N-methyl-N-(2-methoxyethyl)ammonium bis(trifluoromethanesulfonyl)imide, N,N-diethyl-N-methyl-N-(2-methoxyethyl)ammonium bis(pentafluoroethanesulfonyl)imide, glycidyltrimethylammonium trifluoromethanesulfonate, glycidyltrimethylammonium bis(trifluoromethanesulfonyl)imide, glycidyltrimethylammonium bis(pentafluoroethanesulfonyl)imide, diallyldimethylammonium bis(trifluoromethanesulfonyl)imide, diallyldimethyl bis(pentafluoroethanesulfonyl)imide, lithium bis(trifluoromethanesulfonyl)imide, and lithium bis(fluorosulfonyl)imide.

Of those ionic liquids, 1-hexylpyridinium bis(fluorosulfonyl)imide, 1-ethyl-3-methylpyridinium trifluoromethanesulfonate, 1-ethyl-3-methylpyridinium pentafluoroethanesulfonate, 1-ethyl-3-methylpyridinium heptafluoropropanesulfonate, 1-ethyl-3-methylpyridinium nonafluorobutanesulfonate, 1-butyl-3-methylpyridinium trifluoromethanesulfonate, 1-butyl-3-methylpyridinium bis(trifluoromethanesulfonyl)imide, 1-octyl-4-methylpyridinium bis(fluorosulfonyl)imide, 1-methyl-1-propylpyrrolidinium bis(trifluoromethanesulfonyl)imide, 1-methyl-1-propylpyrrolidinium bis(fluorosulfonyl)imide, 1-methyl-1-propylpiperidinium bis(trifluoromethanesulfonyl)imide, 1-methyl-1-propylpiperidinium bis(fluorosulfonyl)imide, 1-ethyl-3-methylimidazolium trifluoromethanesulfonate, 1-ethyl-3-methylimidazolium heptafluoropropanesulfonate, 1-ethyl-3-methylimidazolium bis(trifluoromethanesulfonyl)imide, 1-ethyl-3-methylimidazolium bis(fluorosulfonyl)imide, 1-hexyl-3-methylimidazolium bis(fluorosulfonyl)imide, trimethylpropylammonium bis(trifluoromethanesulfonyl)imide, lithium bis(trifluoromethanesulfonyl)imide, and lithium bis(fluorosulfonyl)imide are more preferred.

Although a commercial product may be used as the ionic liquid, the ionic liquid may be synthesized as described below. A method of synthesizing the ionic liquid is not particularly limited as long as a target ionic liquid is obtained. In general, however, for example, such a halide method, a hydroxide method, an acid ester method, a complex formation method, and a neutralization method as described in the literature "Ionic Liquids: The Front and Future of Material Development" (published by CMC Publishing Co., Ltd.) are each used.

The synthesis methods, that is, the halide method, the hydroxide method, the acid ester method, the complex formation method, and the neutralization method are described below by taking a nitrogen-containing onium salt as an example. However, any other ionic liquid, such as a sulfur-containing onium salt or a phosphorus-containing onium salt, may be obtained by the same approach.

The halide method is a method performed by such reactions as represented by the reaction formulae (1) to (3). First, a tertiary amine and an alkyl halide are caused to react with each other to provide a halide (the reaction formula (1), chlorine, bromine, or iodine is used as a halogen).

The resultant halide is caused to react with an acid (HA) or salt (MA where M represents a cation that forms a salt with a target anion, such as an ammonium, lithium, sodium, or potassium ion) having the anion structure (A⁻) of a target ionic liquid to provide the target ionic liquid (R₄NA).
(1) R₃N+RX→R₄NX (X: Cl, Br, I)
(2) R₄NX+HA→R₄NA+HX
(3) R₄NX+MA→R₄NA+MX (M: NH₄, Li, Na, K, Ag 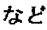 )

The hydroxide method is a method performed by such reactions as represented by the reaction formulae (4) to (8). First, a halide (R₄NX) is subjected to ion-exchange membrane method electrolysis (the reaction formula (4)), a OH-type ion-exchange resin method (the reaction formula (5)), or a reaction with silver oxide (Ag₂O) (the reaction formula (6)) to provide a hydroxide (R₄NOH) (chlorine, bromine, or iodine is used as a halogen).

Reactions represented by the reaction formulae (7) and (8) are used for the resultant hydroxide as in the halide method. Thus, the target ionic liquid (R₄NA) is obtained.
(4) R₄NX+H₂O→R₄NOH+1/2H₂+1/2X₂ (X: Cl, Br, I)
(5) R₄NX+P-OH→R₄NOH+P-X (P-OH: OH-type ion-exchange resin)
(6) R₄NX+1/2Ag₂O+1/2H₂O→R₄NOH+AgX
(7) R₄NOH+HA→R₄NA+H₂O
(8) R₄NOH+MA→R₄NA+MOH (M: NH₄, Li, Na, K, Ag, or the like)

The acid ester method is a method performed by such reactions as represented by the reaction formulae (9) to (11). First, a tertiary amine (R₃N) is caused to react with an acid ester to provide an acid esterified product (the reaction formula (9), an ester of an inorganic acid, such as sulfuric acid, sulfurous acid, phosphoric acid, phosphorous acid, or carbonic acid, an ester of an organic acid, such as methanesulfonic acid, methylphosphonic acid, or formic acid, or the like is used as the acid ester).

Reactions represented by the reaction formulae (10) and (11) are used for the resultant acid esterified product as in the halide method. Thus, the target ionic liquid (R₄NA) is obtained. In addition, the ionic liquid may be directly obtained by using methyl trifluoromethanesulfonate, methyl trifluoroacetate, or the like as the acid ester.
(9) R₃N+ROY→R₄NOY 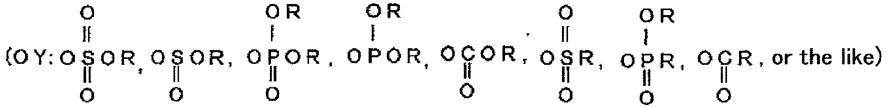
(10) R₄NOY+HA→R₄NA+HOY 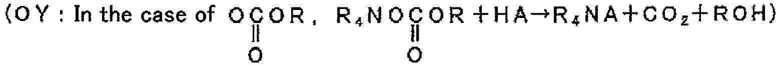
(11) R₄NOY+MA→R₄NA+MOY (M: NH₄, Li, Na, K, Ag, or the like)

The neutralization method is a method performed by such a reaction as represented by the reaction formula (12). The nitrogen-containing onium salt may be obtained by causing the tertiary amine and an organic acid, such as CF₃COOH, CF₃SO₃H, (CF₃SO₂)₂NH, (CF₃SO₂)₃CH, or (C₂F₅SO₂)₂NH, to react with each other.
(12) R₃N+HZ→R₃HN⁺Z⁻
[HZ: An organic acid, such as CF₃COOH, CF₃SO₃H, (CF₃SO₂)₂NH, (CF₃SO₂)₃CH, (C₂F₅SO₂)₂NH]

Rs described in the reaction formulae (1) to (12) each represent a hydrogen atom or a hydrocarbon group having 1 to 20 carbon atoms, and may each contain a heteroatom.

The compounding amount of the ionic liquid cannot be sweepingly defined because the compounding amount changes with compatibility between the polymer to be used and the ionic liquid. In general, however, the compounding amount is preferably from 0.001 part by weight to 50 parts by weight, more preferably from 0.01 part by weight to 40 parts by weight, still more preferably from 0.01 part by weight to 30 parts by weight, particularly preferably from 0.01 part by weight to 20 parts by weight, most preferably from 0.01 part by weight to 10 parts by weight with respect to 100 parts by weight of the base polymer. When the compounding amount of the ionic liquid is adjusted within the range, a pressure-sensitive adhesive composition extremely excellent in antistatic property can be provided. When the compounding amount of the ionic liquid is less than 0.001 part by weight, a sufficient antistatic characteristic may not be obtained. When the compounding amount of the ionic liquid is more than 50 parts by weight, the contamination of an adherend tends to worsen.

The pressure-sensitive adhesive composition may contain a modified silicone oil to the extent that the effect of the present invention is not impaired. When the pressure-sensitive adhesive composition contains the modified silicone oil, the effect of an antistatic characteristic can be expressed. In particular, when the oil is used in combination with the ionic liquid, the effect of the antistatic characteristic can be more effectively expressed.

When the pressure-sensitive adhesive composition contains the modified silicone oil, its content ratio is preferably from 0.001 part by weight to 50 parts by weight, more preferably from 0.005 part by weight to 40 parts by weight, still more preferably from 0.007 part by weight to 30 parts by weight, particularly preferably from 0.008 part by weight to 20 parts by weight, most preferably from 0.01 part by weight to 10 parts by weight with respect to 100 parts by weight of the base polymer. When the content ratio of the modified silicone oil is adjusted within the range, the effect of the antistatic characteristic can be more effectively expressed.

Any appropriate modified silicone oil may be adopted as the modified silicone oil to the extent that the effect of the present invention is not impaired. Such modified silicone oil is, for example, a modified silicone oil available from Shin-Etsu Chemical Co., Ltd.

The modified silicone oil is preferably a polyether-modified silicone oil. When the polyether-modified silicone oil is adopted, the effect of the antistatic characteristic can be more effectively expressed.

Examples of the polyether-modified silicone oil include a side chain-type polyether-modified silicone oil and a both-end-type polyether-modified silicone oil. Of those, a both-end-type polyether-modified silicone oil is preferred because the effect of the antistatic characteristic can be sufficiently more effectively expressed.

### <<8. Other Constituent Members>>

An adhesive layer may be arranged on the side of the transparent substrate layer opposite to the infrared reflection layer. The adhesive layer may be used in, for example, the bonding of the heat-shielding heat insulating substrate to a window glass or the like.

The adhesive layer is preferably a layer having the following features: the layer has a high visible light transmittance; and a difference in refractive index between the layer and the transparent substrate layer is small. Any appropriate material may be adopted as a material for the adhesive layer to the extent that the effect of the present invention is not impaired. Such material is, for example, an acrylic pressure-sensitive adhesive (acrylic pressure-sensitive adhesive). The acrylic pressure-sensitive adhesive (acrylic pressure-sensitive adhesive) is suitable as a material for the adhesive layer because the pressure-sensitive adhesive is excellent in optical transparency, shows moderate wettability, moderate cohesiveness, and a moderate adhesive property, and is excellent in weatherability, heat resistance, and the like.

The adhesive layer is preferably a layer having a high visible light transmittance and a low UV light transmittance. A reduction in UV light transmittance of the adhesive layer can suppress the deterioration of the infrared reflection layer resulting from UV light, such as sunlight. From the viewpoint of reducing the UV light transmittance of the adhesive layer, the adhesive layer preferably contains a UV absorber. The use of the transparent substrate layer or the like containing the UV absorber can also suppress the deterioration of the infrared reflection layer resulting from UV light from the outdoors.

A separator is preferably temporarily bonded to the exposed surface of the adhesive layer to cover the exposed surface for the purpose of, for example, preventing the contamination of the exposed surface until the heat-shielding heat insulating substrate of the present invention is put into practical use. Such separator can prevent the contamination of the exposed surface of the adhesive layer in its typical handling state due to contact with the outside.

### <<9. Applications of Heat-shielding Heat Insulating Substrate>>

The heat-shielding heat insulating substrate of the present invention may be used in, for example, a window of a building, a vehicle, or the like, a transparent case configured to store a plant or the like, or a freezing or refrigerating showcase, and can have an action of improving an air-conditioning effect or preventing an abrupt temperature change.

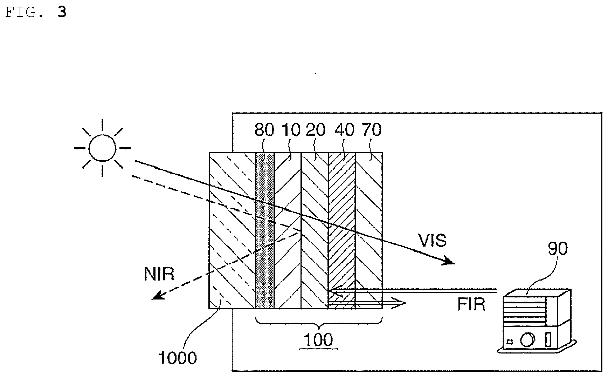

FIG. **3** is a sectional view for schematically illustrating an example of the usage mode of the heat-shielding heat insulating substrate of the present invention. In this usage mode, the transparent substrate layer **10** side of the heat-shielding heat insulating substrate **100** of the present invention is bonded to and arranged on the indoor side of a window **1000** of a building or an automobile via any appropriate adhesive layer **80**. As schematically illustrated in FIG. **3**, the heat-shielding heat insulating substrate **100** of the present invention transmits visible light (VIS) from the outdoors to introduce the light into a room, and reflects a near-infrared ray (NIR) from the outdoors on the infrared reflection layer **20**. The reflection of the near-infrared ray suppresses the inflow of heat from the outside of the room to the inside of the room resulting from sunlight or the like (exhibits a heat-shielding effect), and hence, for example, cooling efficiency in the summer season can be improved. Further, the infrared reflection layer **20** reflects a far-infrared ray (FIR) in the room radiated from a heating appliance **90**. Accordingly, a heat-insulating effect is exhibited, and hence heating efficiency in the winter season can be improved. In addition, the heat-shielding heat insulating substrate **100** of the present invention includes the infrared reflection layer **20**, and is hence reduced in visible light reflectance. Accordingly, when the substrate is used in, for example, a showcase or a show-window, the substrate can impart a heat-shielding property and a heat-insulating property thereto without reducing the visibility of a commercial product or the like.

As disclosed in, for example, JP 2013-61370 A, the heat-shielding heat insulating substrate of the present invention may be used by being fit into a frame body or the like. In such mode, there is no need to arrange the adhesive layer, and hence the absorption of a far-infrared ray by the adhesive layer does not occur. Accordingly, when a material (e.g., cyclic polyolefin) having a small content of a functional group, such as a C=C bond, a C=O bond, a C-O bond, or an aromatic ring, is used as the transparent substrate layer, a far-infrared ray from the transparent substrate layer side can be reflected on the infrared reflection layer, and hence heat-insulating properties can be imparted to both surface sides of the heat-shielding heat insulating substrate of the present invention. Such configuration is particularly useful in, for example, a refrigerating showcase or a freezing showcase.

When the transparent substrate layer of the heat-shielding heat insulating substrate of the present invention is, for example, a transparent plate-like member (e.g., glass, an acrylic plate, or a polycarbonate plate) or a composite of the transparent plate-like member and a transparent film, the substrate may be applied as it is to, for example, a window of a building or an automobile.

### Examples

Now, the present invention is described specifically by way of Examples. However, the present invention is by no means limited to these Examples. Test and evaluation methods in Examples and the like are as described below. The term "part(s)" in the following description means "part(s) by weight" unless otherwise specified, and the term "%" in the following description means "wt%" unless otherwise specified.

### <Thicknesses of Respective Layers>

The thicknesses of a metal oxide layer and a metal layer were each determined by: processing a sample with a focused ion beam processing-observing apparatus (manufactured by Hitachi, Ltd., product name: "FB-2100") in accordance with a focused ion beam (FIB) method; and observing a section of the sample with a field emission transmission electron microscope (manufactured by Hitachi, Ltd., product name: "HF-2000").

The thicknesses of a protective topcoat layer and an undercoat layer were each determined by calculation from the interference pattern of a visible light reflectance when light was applied from a measuring object side by using an instantaneous multi-photometric system (manufactured by Otsuka Electronics Co., Ltd., product name: "MCPD3000").

The thickness of a protective film was determined by measuring the thickness of the sample with a 1/100 dial gauge whose measuring terminal had a diameter of 20 mm.

### <Production of Heat-shielding Heat Insulating Substrate (A) for Measurement>

A heat-shielding heat insulating substrate (A) for measurement was produced by: adopting a film cut into a size measuring 50 mm by 100 mm as a protective film; adopting a member cut into a size measuring 100 mm by 100 mm as a member to which the protective film was to be bonded (member to be turned into a heat-shielding heat insulating substrate by bonding the protective film thereto); lightly bonding the protective film to a protective topcoat layer; and then moving a 5-kilogram roller from above the protective film in one way at a speed of about 2 m per minute to pressure-bond the film to the layer. With regard to a heat-shielding heat insulating substrate in a state in which the protective film had already been bonded thereto, the heat-shielding heat insulating substrate was cut into a size measuring 50 mm by 100 mm to provide the heat-shielding heat insulating substrate (A) for measurement.

### <Production of Heat-shielding Heat Insulating Substrate (B) for Measurement>

A heat-shielding heat insulating substrate (B) for measurement was produced by: setting the size of a protective film equal to the size of a member to which the protective film was to be bonded (member to be turned into a heat-shielding heat insulating substrate by bonding the protective film thereto); lightly bonding the protective film to a protective topcoat layer; and then moving a 5-kilogram roller from above the protective film in one way at a speed of about 2 m per minute to pressure-bond the film to the layer. With regard to a heat-shielding heat insulating substrate in a state in which the protective film had already been bonded thereto, the heat-shielding heat insulating substrate was cut into a size measuring 50 mm by 100 mm to provide the heat-shielding heat insulating substrate (B) for measurement.

### <180° Peel Strength of Protective Film to Protective Topcoat Layer under Environment having Temperature of 23±1°C and Humidity of 50±5%RH (180° Peel Strength before Storage)>

The heat-shielding heat insulating substrate (A) for measurement was left to stand at room temperature for 24 hours, and then an idle portion on the short-side side of the protective film was folded back by 180° and peeled by about 10 mm (i.e., peeled in a width of 50 mm by about 10 mm). After that, a portion except the protective film of the heat-shielding heat insulating substrate was interposed in a lower chuck, and the idle portion of the protective film was interposed in an upper chuck. Attention was paid so that the protective film that had been folded back was parallel to the surface having bonded thereto the protective film. The film was continuously peeled under an environment at 23±1°C and 50±5%RH at a rate of 300 mm per minute, and the average of strengths was read. The actual values of the temperature and the humidity at the time of the actual measurement were as follows: a temperature of 23°C and a humidity of 50%RH.

### <180° Peel Strength of Protective Film to Protective Topcoat Layer after Storage of Heat-shielding Heat Insulating Substrate under Environment having Temperature of 50±1°C for 20 Days>

The heat-shielding heat insulating substrate (A) for measurement was left to stand at room temperature for 24 hours, and was then further stored under an environment having a temperature of 50±1°C for 20 days. After that, an idle portion on the short-side side of the protective film was folded back by 180° and peeled by about 10 mm (i.e., peeled in a width of 50 mm by about 10 mm). After that, a portion except the protective film of the heat-shielding heat insulating substrate was interposed in a lower chuck, and the idle portion of the protective film was interposed in an upper chuck. Attention was paid so that the protective film that had been folded back was parallel to the surface having bonded thereto the protective film. The film was continuously peeled under an environment at 23±1°C and 50±5%RH at a rate of 300 mmper minute, and the average of strengths was read. The actual values of the temperature and the humidity at the time of the actual measurement were as follows: a temperature of 23°C and a humidity of 50%RH.

### <180° Peel Strength of Protective Film to Protective Topcoat Layer after Storage of Heat-shielding Heat Insulating Substrate under Environment having Temperature of 80±1°C for 10 Days>

The heat-shielding heat insulating substrate (A) for measurement was left to stand at room temperature for 24 hours, and was then further stored under an environment having a temperature of 80±1°C for 10 days. After that, an idle portion on the short-side side of the protective film was folded back by 180° and peeled by about 10 mm (i.e., peeled in a width of 50 mm by about 10 mm). After that, a portion except the protective film of the heat-shielding heat insulating substrate was interposed in a lower chuck, and the idle portion of the protective film was interposed in an upper chuck. Attention was paid so that the protective film that had been folded back was parallel to the surface having bonded thereto the protective film. The film was continuously peeled under an environment at 23±1°C and 50±5%RH at a rate of 300 mmper minute, and the average of strengths was read. The actual values of the temperature and the humidity at the time of the actual measurement were as follows: a temperature of 23°C and a humidity of 50%RH.

### <Steel Wool (SW) Scratch Resistance Test>

The heat-shielding heat insulating substrate (B) for measurement was left to stand at room temperature for 24 hours, and then its transparent substrate layer-side surface was bonded to a glass plate having a thickness of 1.3 mm via a pressure-sensitive adhesive layer having a thickness of 25 µm (manufactured by Nitto Denko Corporation, product name: "HJ-9150W"). A product thus obtained was used as a sample. The surface of the protective film of the heat-shielding heat insulating substrate (B) on the glass plate was reciprocally rubbed with steel wool (manufactured by Bonstar Sales Co., Ltd., #0000) 10 times by using a decuplet-type pen testing machine while a load of 1,000 g was applied to the steel wool. The presence or absence of a flaw in the sample, or the peeling of the protective film, after the test was visually evaluated, and the sample was evaluated in accordance with the following evaluation criteria. The actual values of the temperature and the humidity at the time of the actual test were as follows: a temperature of 23°C and a humidity of 50%RH.
o: The sample in which no flaw is observed in the surface of the protective film and the peeling of the film does not occur
Δ: The sample in which some flaws are observed in the surface of the protective film but the peeling of the film does not occur
×: The sample in which many flaws in the surface of the protective film and the peeling of the film are observed

### <Test of Protective Topcoat Layer for Cotton Scratch Resistance (Test for Cotton Scratch Resistance before Storage)>

The heat-shielding heat insulating substrate (B) for measurement was left to stand at room temperature for 24 hours, and then the protective film was peeled from the surface of the protective topcoat layer under an environment at 23±1°C and 50±5%RH. A product obtained by bonding the transparent substrate layer-side surface of the heat-shielding heat insulating substrate (B) to an aluminum plate via a pressure-sensitive adhesive layer having a thickness of 25 µm (manufactured by Nitto Denko Corporation, product name: "HJ-9150W") was used as a sample. The surface of the protective topcoat layer of the heat-shielding heat insulating substrate (B) on the aluminum plate was reciprocally rubbed with a test cotton cloth (calico No. 3) 1,000 times by using a Gakushin abrasion tester while a load of 500 g was applied to the cloth. The presence or absence of a flaw in the sample, or the peeling of the protective topcoat layer, after the test was visually evaluated, and the sample was evaluated in accordance with the following evaluation criteria. The evaluation was performed five times, and the average of the evaluation results was evaluated. The actual values of the temperature and the humidity at the time of the test involving using the Gakushin abrasion tester were as follows: a temperature of 23°C and a humidity of 50%RH.
⊚: The sample in which no flaw is observed in the surface of the protective topcoat layer after 2,000 times of reciprocal rubbing
○: The sample in which no flaw is observed in the surface of the protective topcoat layer after 1,000 times of reciprocal rubbing
Δ: The sample in which some flaws are observed in the surface of the protective topcoat layer after 1,000 times of reciprocal rubbing
×: The sample in which many flaws are observed in the surface of the protective topcoat layer after 1,000 times of reciprocal rubbing

### <Test of Protective Topcoat Layer for Cotton Scratch Resistance after Storage of Heat-shielding Heat Insulating Substrate under Environment having Temperature of 80±1°C for 10 Days>

The heat-shielding heat insulating substrate (B) for measurement was left to stand at room temperature for 24 hours, and was then further stored under an environment having a temperature of 80±1°C for 10 days. After that, the protective film was peeled from the surface of the protective topcoat layer. The surface was lightly wiped with a cloth impregnated with ethanol, and then the transparent substrate layer-side surface of the heat-shielding heat insulating substrate (B) was bonded to an aluminum plate via a pressure-sensitive adhesive layer having a thickness of 25 µm (manufactured by Nitto Denko Corporation, product name: "HJ-9150W"). A product thus obtained was used as a sample. The surface of the protective topcoat layer of the heat-shielding heat insulating substrate (B) on the aluminum plate was reciprocally rubbed with a test cotton cloth (calico No. 3) 1,000 times by using a Gakushin abrasion tester while a load of 500 g was applied to the cloth. The presence or absence of a flaw in the sample, or the peeling of the protective topcoat layer, after the test was visually evaluated, and the sample was evaluated in accordance with the following evaluation criteria. The evaluation was performed five times, and the average of the evaluation results was evaluated. The actual values of the temperature and the humidity at the time of the test involving using the Gakushin abrasion tester were as follows: a temperature of 23°C and a humidity of 50%RH.
⊚: The sample in which no flaw is observed in the surface of the protective topcoat layer after 2,000 times of reciprocal rubbing
o: The sample in which no flaw is observed in the surface of the protective topcoat layer after 1,000 times of reciprocal rubbing
Δ: The sample in which some flaws are observed in the surface of the protective topcoat layer after 1,000 times of reciprocal rubbing
×: The sample in which many flaws are observed in the surface of the protective topcoat layer after 1,000 times of reciprocal rubbing

### <Test of Protective Topcoat Layer for Cotton Scratch Resistance after Storage of Heat-shielding Heat Insulating Substrate under Environment having Temperature of 50±1°C for 20 Days>

The heat-shielding heat insulating substrate (B) for measurement was left to stand at room temperature for 24 hours, and was then further stored under an environment having a temperature of 50±1°C for 20 days. After that, the protective film was peeled from the surface of the protective topcoat layer. The transparent substrate layer-side surface of the heat-shielding heat insulating film (B) was bonded to an aluminum plate via a pressure-sensitive adhesive layer having a thickness of 25 µm (manufactured by Nitto Denko Corporation, product name: "HJ-9150W"). A product thus obtained was used as a sample . The surface of the protective topcoat layer of the heat-shielding heat insulating substrate (B) on the aluminum plate was reciprocally rubbed with a test cotton cloth (calico No. 3) 1,000 times by using a Gakushin abrasion tester while a load of 500 g was applied to the cloth. The presence or absence of a flaw in the sample, or the peeling of the protective topcoat layer, after the test was visually evaluated, and the sample was evaluated in accordance with the following evaluation criteria. The evaluation was performed five times, and the average of the evaluation results was evaluated. The actual values of the temperature and the humidity at the time of the test involving using the Gakushin abrasion tester were as follows: a temperature of 23°C and a humidity of 50%RH.
⊚: The sample in which no flaw is observed in the surface of the protective topcoat layer after 2,000 times of reciprocal rubbing
o: The sample in which no flaw is observed in the surface of the protective topcoat layer after 1,000 times of reciprocal rubbing
Δ: The sample in which some flaws are observed in the surface of the protective topcoat layer after 1,000 times of reciprocal rubbing
×: The sample in which many flaws are observed in the surface of the protective topcoat layer after 1,000 times of reciprocal rubbing

### <Measurement of Water Contact Angle α>

The heat-shielding heat insulating substrate (B) for measurement was left to stand at room temperature for 24 hours, and was then further stored under an environment having a temperature of 50±1°C for 20 days. After that, the protective film was peeled from the surface of the protective topcoat layer.

2 Microliters of distilled water was dropped on the surface of the protective topcoat layer under an environment having a temperature of 23±1°C and a humidity of 50±5%RH, and 10 seconds after the dropping, the contact angle of the liquid droplet was measured with a contact angle meter (manufactured by Kyowa Interface Science Co., Ltd., product name: "Model CA-X"). The measurement was performed three times, and the average of the resultant measured values was defined as the water contact angle α of the surface. The actual values of the temperature and the humidity at the time of the actual measurement of the water contact angle were as follows: a temperature of 23°C and a humidity of 50%RH.

### <Measurement of Water Contact Angle β>

The heat-shielding heat insulating substrate (B) for measurement was left to stand at room temperature for 24 hours. After that, the protective film was peeled from the surface of the protective topcoat layer.

2 Microliters of distilled water was dropped on the surface of the protective topcoat layer under an environment having a temperature of 23±1°C and a humidity of 50±5%RH, and 10 seconds after the dropping, the contact angle of the liquid droplet was measured with a contact angle meter (manufactured by Kyowa Interface Science Co., Ltd., product name: "Model CA-X"). The measurement was performed three times, and the average of the resultant measured values was defined as the water contact angle β of the surface. The actual values of the temperature and the humidity at the time of the actual measurement of the water contact angle were as follows: a temperature of 23°C and a humidity of 50%RH.

### <Measurement of Water Contact Angle β'>

The protective film was bonded to a standard substrate produced in accordance with a production method to be described later at room temperature, and the resultant was left to stand at room temperature for 24 hours. After that, the protective film was peeled from the surface of the protective topcoat layer.

2 Microliters of distilled water was dropped on the surface of the protective topcoat layer under an environment having a temperature of 23±1°C and a humidity of 50±5%RH, and 10 seconds after the dropping, the contact angle of the liquid droplet was measured with a contact angle meter (manufactured by Kyowa Interface Science Co., Ltd., product name: "Model CA-X"). The measurement was performed three times, and the average of the resultant measured values was defined as the water contact angle β' of the surface. The actual values of the temperature and the humidity at the time of the actual measurement of the water contact angle were as follows: a temperature of 23°C and a humidity of 50%RH.

### <Measurement of Water Contact Angle γ>

A standard substrate produced in accordance with a production method to be described later was left to stand at room temperature for 24 hours.

2 Microliters of distilled water was dropped on the surface of the protective topcoat layer under an environment having a temperature of 23±1°C and a humidity of 50±5%RH, and 10 seconds after the dropping, the contact angle of the liquid droplet was measured with a contact angle meter (manufactured by Kyowa Interface Science Co., Ltd., product name: "Model CA-X"). The measurement was performed three times, and the average of the resultant measured values was defined as the water contact angle γ of the surface. The actual values of the temperature and the humidity at the time of the actual measurement of the water contact angle were as follows: a temperature of 23°C and a humidity of 50%RH.

### [Production Example 1]: Production of Standard Substrate

### (Formation of Undercoat Layer on Transparent Substrate Layer)

An acrylic UV-curable hard coat layer (manufactured by JSR Corporation, OPSTAR Z7540) was formed on one surface of a float plate glass having a thickness of 3 mm (manufactured by Matsunami Glass Ind., Ltd., visible light transmittance: 91%) so as to have a thickness of 2 µm. In detail, a solution of the hard coat layer was applied to the surface with a gravure coater, and was dried at 80°C. After that, the dried product was irradiated with UV light having an integrated light quantity of 300 mJ/cm² from an ultrahigh-pressure mercury lamp to be cured. Thus, an undercoat layer was formed on the transparent substrate layer.

### (Formation of First Metal Oxide Layer, Metal Layer, and Second Metal Oxide Layer)

A zinc-tin composite oxide (ZTO) layer having a thickness of 10 nm, a Ag-Pd alloy layer having a thickness of 16 nm, and a zinc-tin composite oxide (ZTO) layer having a thickness of 10 nm were sequentially formed on the undercoat layer formed on the transparent substrate layer with a winding-type sputtering apparatus by a DC magnetron sputtering method. Thus, a first metal oxide layer, a metal layer, and a second metal oxide layer were formed on the undercoat layer in the stated order.

In the formation of each of the ZTO layers, sputtering was performed by using a target, which had been obtained by sintering zinc oxide, tin oxide, and metal zinc powder at a weight ratio of 8.5:83:8.5, under the conditions of a power density of 2.67 W/cm² and a process pressure of 0.4 Pa. At this time, the amounts of gases to be introduced into a sputter film-forming chamber were adjusted so that a ratio "Ar:O₂" became 98:2 (volume ratio) .

In the formation of the Ag-Pd alloy layer, a metal target containing silver and palladium at a weight ratio of 96.4:3.6 was used.

### (Formation of Protective Topcoat Layer)

A protective topcoat layer formed of a fluorine-based UV-curable resin containing a coordinate bonding material was formed on the second metal oxide layer so as to have a thickness of 60 nm. In detail, 5 parts by weight of a phosphoric acid ester compound (manufactured by Nippon Kayaku Co., Ltd., product name: "KAYAMER PM-21") was added to 100 parts by weight of the solid content of a fluorine-based hard coat resin solution (manufactured by JSR Corporation, product name: "OPSTAR JUA204"), and the mixture was applied to the second metal oxide layer with a spin coater, and was dried at 100°C for 1 minute. After that, the dried product was irradiated with UV light having an integrated light quantity of 400 mJ/cm² from an ultrahigh-pressure mercury lamp under a nitrogen atmosphere to be cured. The phosphoric acid ester compound is a mixture of a phosphoric acid monoester compound having 1 acryloyl group in a molecule thereof (compound represented by the general formula (A) in which X represents a methyl group, n=0, and p=1) and a phosphoric acid diester compound having 2 acryloyl groups in a molecule thereof (compound represented by the general formula (A) in which X represents a methyl group, n=0, and p=2).

### (Standard Substrate)

Thus, a standard substrate having the configuration "transparent substrate layer (thickness: 3 mm)/undercoat layer (thickness: 2 µm) /first metal oxide layer (thickness: 10 nm) /metal layer (thickness: 16 nm)/second metal oxide layer (thickness: 10 nm)/protective topcoat layer (thickness: 60 nm)" was obtained.

### [Example 1]

### (Formation of Undercoat Layer on Transparent Substrate Layer)

An acrylic UV-curable hard coat layer (manufactured by JSR Corporation, OPSTAR Z7540) was formed on one surface of a float plate glass having a thickness of 3 mm (manufactured by Matsunami Glass Ind., Ltd., visible light transmittance: 91%) so as to have a thickness of 2 µm. In detail, a solution of the hard coat layer was applied to the surface with a gravure coater, and was dried at 80°C. After that, the dried product was irradiated with UV light having an integrated light quantity of 300 mJ/cm² from an ultrahigh-pressure mercury lamp to be cured. Thus, an undercoat layer was formed on the transparent substrate layer.

### (Formation of First Metal Oxide Layer, Metal Layer, and Second Metal Oxide Layer)

A zinc-tin composite oxide (ZTO) layer having a thickness of 10 nm, a Ag-Pd alloy layer having a thickness of 16 nm, and a zinc-tin composite oxide (ZTO) layer having a thickness of 10 nm were sequentially formed on the undercoat layer formed on the transparent substrate layer with a winding-type sputtering apparatus by a DC magnetron sputtering method. Thus, a first metal oxide layer, a metal layer, and a second metal oxide layer were formed on the undercoat layer in the stated order.

In the formation of each of the ZTO layers, sputtering was performed by using a target, which had been obtained by sintering zinc oxide, tin oxide, and metal zinc powder at a weight ratio of 8.5:83:8.5, under the conditions of a power density of 2.67 W/cm² and a process pressure of 0.4 Pa. At this time, the amounts of gases to be introduced into a sputter film-forming chamber were adjusted so that a ratio "Ar:O₂" became 98:2 (volume ratio) .

In the formation of the Ag-Pd alloy layer, a metal target containing silver and palladium at a weight ratio of 96.4:3.6 was used.

### (Formation of Protective Topcoat Layer)

A surface protective layer formed of a fluorine-based UV-curable resin containing a coordinate bonding material was formed on the second metal oxide layer so as to have a thickness of 60 nm. In detail, 5 parts by weight of a phosphoric acid ester compound (manufactured by Nippon Kayaku Co., Ltd., product name: "KAYAMER PM-21") was added to 100 parts by weight of the solid content of a fluorine-based hard coat resin solution (manufactured by JSR Corporation, product name: "OPSTAR JUA204"), and the mixture was applied to the second metal oxide layer with a spin coater, and was dried at 100°C for 1 minute. After that, the dried product was irradiated with UV light having an integrated light quantity of 400 mJ/cm² from an ultrahigh-pressure mercury lamp under a nitrogen atmosphere to be cured. The phosphoric acid ester compound is a mixture of a phosphoric acid monoester compound having 1 acryloyl group in a molecule thereof (compound represented by the general formula (A) in which X represents a methyl group, n=0, and p=1) and a phosphoric acid diester compound having 2 acryloyl groups in a molecule thereof (compound represented by the general formula (A) in which X represents a methyl group, n=0, and p=2).

### (Formation of Protective Film)

85 Parts by weight of PREMINOL S3011 (manufactured by Asahi Glass Co., Ltd., Mn=10,000), which was a polyol having 3 OH groups, 13 parts by weight of SANNIX GP-3000 (manufactured by Sanyo Chemical Industries, Ltd., Mn=3,000), which was a polyol having 3 OH groups, and 2 parts by weight of SANNIXGP-1000 (manufactured by Sanyo Chemical Industries, Ltd., Mn=1,000), which was a polyol having 3 OH groups, the polyols serving as the polyols (A), 18 parts by weight of CORONATE HX (manufactured by Nippon Polyurethane Industry Co., Ltd.), which was a polyfunctional alicyclic isocyanate compound, the compound serving as the polyfunctional isocyanate compound (B), 0.1 part by weight of a catalyst (manufactured by Nihon Kagaku Sangyo Co., Ltd., product name : NACEMFERRIC IRON), 20 parts by weight of isopropyl myristate (manufactured by Kao Corporation, product name: EXCEPARL IPM, Mn=270) serving as a fatty acid ester, 1.5 parts by weight of 1-ethyl-3-methylimidazolium bis(fluoromethanesulfonyl)imide (manufactured by DKS Co., Ltd., product name: ELEXCEL AS-110), 0.02 part by weight of a both-end-type polyether-modified silicone oil (manufactured by Shin-Etsu Chemical Co., Ltd., product name: KF-6004), 0.25 part by weight of a siloxane bond-containing polymer (manufactured by Kyoeisha Chemical Co., Ltd., product name : LE-302), and ethyl acetate serving as a diluting solvent were loaded, and the materials were mixed and stirred to produce a pressure-sensitive adhesive composition (1).

The resultant pressure-sensitive adhesive composition (1) was applied to a base material "LUMIRROR S10" formed of a polyester resin (thickness: 38 µm, manufactured by Toray Industries, Inc.) with a fountain roll so that its thickness after drying became 12 µm. The composition was cured and dried under the conditions of a drying temperature of 130°C and a drying time of 30 seconds. Thus, a pressure-sensitive adhesive layer was produced on the base material. Next, one surface of a 25-micrometer thick base material (separator) formed of a polyester resin was subjected to a silicone treatment, and the silicone-treated surface was bonded to the surface of the pressure-sensitive adhesive layer. Thus, a protective film (1) with a separator was obtained. The resultant protective film (1) with a separator was bonded onto the surface of the protective topcoat layer, and the separator was peeled.

### (Heat-shielding Heat Insulating Substrate)

Thus, a heat-shielding heat insulating substrate (1) having the configuration "transparent substrate layer (thickness: 3 mm)/undercoat layer (thickness: 2 µm)/first metal oxide layer (thickness: 10 nm) /metal layer (thickness: 16nm)/second metal oxide layer (thickness: 10 nm)/protective topcoat layer (thickness: 60 nm)/protective film (thickness: 50 µm)" was obtained.

The results are shown in Table 1.

### [Example 2]

100 Parts by weight of the polyols (A) described in Example 1, 18 parts by weight of CORONATE HX (manufactured by Nippon Polyurethane Industry Co., Ltd.), which was a polyfunctional alicyclic isocyanate compound, the compound serving as the polyfunctional isocyanate compound (B), 0.1 part by weight of a catalyst (manufactured by Nihon Kagaku Sangyo Co., Ltd., product name: NACEM FERRIC IRON), 0.25 part by weight of a hydroxy group-containing silicone (manufactured by Shin-Etsu Chemical Co., Ltd., product name: X-22-4015), and ethyl acetate serving as a diluting solvent were loaded, and the materials were mixed and stirred to produce a pressure-sensitive adhesive composition (2). A protective film (2) with a separator was obtained in the same manner as in Example 1 except that the pressure-sensitive adhesive composition (2) was used instead of the pressure-sensitive adhesive composition (1).

A heat-shielding heat insulating substrate (2) was obtained in the same manner as in Example 1 except that the protective film (2) with a separator was used instead of the protective film (1) with a separator.

The results are shown in Table 1.

### [Example 3]

100 Parts by weight of "CYABINE SH-109" (solid content: 54%, containing a fatty acid ester, manufactured by Toyo Ink Co., Ltd.) serving as the urethane prepolymer (C), 3.6 parts by weight of CORONATE HX (manufactured by Nippon Polyurethane Industry Co., Ltd.), which was a polyfunctional alicyclic isocyanate compound, the compound serving as the polyfunctional isocyanate compound (B), and toluene serving as a diluting solvent were compounded, and the materials were stirred with a disper to produce a pressure-sensitive adhesive composition (3). A protective film (3) with a separator was obtained in the same manner as in Example 1 except that the pressure-sensitive adhesive composition (3) was used instead of the pressure-sensitive adhesive composition (1).

A heat-shielding heat insulating substrate (3) was obtained in the same manner as in Example 1 except that the protective film (3) with a separator was used instead of the protective film (1) with a separator.

The results are shown in Table 1.

### [Example 4]

A heat-shielding heat insulating substrate (4) was obtained in the same manner as in Example 1 except that a protective film (4) with a separator (manufactured by RastaBanana, anti-fingerprint and antireflection liquid crystal protective film, product number: T666501SH, thickness of a protective film portion=150 µm) was used instead of the protective film (1) with a separator.

The results are shown in Table 1.

### [Example 5]

### (Preparation of Acrylic Oligomer)

100 Parts by weight of toluene, 60 parts by weight of dicyclopentanyl methacrylate (DCPMA) (product name: FA-513M, manufactured by Hitachi Chemical Company, Ltd.), 40 parts by weight of methyl methacrylate (MMA), and 3.5 parts by weight of methyl thioglycolate serving as a chain transfer agent were loaded into a four-necked flask including a stirring blade, a temperature gauge, a nitrogen gas-introducing tube, a condenser, and a dropping funnel. Then, the mixture was stirred at 70°C under a nitrogen atmosphere for 1 hour. After that, 0.2 part by weight of 2,2'-azobisisobutyronitrile was loaded as a polymerization initiator into the mixture, and the whole was subjected to a reaction at 70°C for 2 hours. Subsequently, the resultant was subjected to a reaction at 80°C for 4 hours, and was then subjected to a reaction at 90°C for 1 hour to provide an acrylic oligomer. The resultant acrylic oligomer had a weight-average molecular weight of 4,000 and a glass transition temperature (Tg) of 144°C.

### (Preparation of Acrylic Polymer Solution)

100 Parts by weight of 2-ethylhexyl acrylate (2EHA), 10 parts by weight of 4-hydroxybutyl acrylate (4HBA), 0.02 part by weight of acrylic acid (AA), 0.2 part by weight of 2,2'-azobisisobutyronitrile serving as a polymerization initiator, and 157 parts by weight of ethyl acetate were loaded into a four-necked flask including a stirring blade, a temperature gauge, a nitrogen gas-introducing tube, and a condenser. While the mixture was gently stirred, a nitrogen gas was introduced into the flask. A polymerization reaction was performed for 6 hours while the temperature of the liquid in the flask was kept at around 65°C. Thus, an acrylic polymer solution (40 wt%) was prepared. The resultant acrylic polymer had a weight-average molecular weight of 540,000 and a glass transition temperature (Tg) of -67°C.

### (Preparation of Acrylic Pressure-sensitive Adhesive Solution)

The acrylic polymer solution (40 wt%) was diluted with ethyl acetate to 20 wt%, and 2 parts by weight (solid content: 0.2 part by weight) of a solution obtained by diluting an organopolysiloxane having an oxyalkylene chain (KF-353, manufactured by Shin-Etsu Chemical Co., Ltd.) serving as a silicone component with ethyl acetate to 10%, 15 parts by weight (solid content: 0.15 part by weight) of a solution obtained by diluting lithium bis(trifluoromethanesulfonyl)imide (LiN(CF₃SO₂)₂: LiTFSI, manufactured by Tokyo Chemical Industry Co., Ltd.) serving as an alkali metal salt (ionic compound), which was an antistatic agent, with ethyl acetate to 1%, 3.5 parts by weight (solid content: 3.5 parts by weight) of an isocyanurate of hexamethylene diisocyanate (manufactured by Nippon Polyurethane Industry Co., Ltd., CORONATE HX), which was a trifunctional isocyanate compound, and 0.3 part by weight (solid content: 0.3 part by weight) of 1,3-bis(isocyanatomethyl)cyclohexane (manufactured by Mitsui Chemicals, Inc., TAKENATE 600), which was a bifunctional isocyanate compound, the compounds serving as cross-linking agents, 2 parts by weight (solid content: 0.02 part by weight) of dibutyltindilaurate (1 wt% ethyl acetate solution) serving as a cross-linking catalyst, and 0.5 part by weight of the acrylic oligomer were added to 500 parts by weight (solid content: 100 parts by weight) of the solution, followed by mixing and stirring. Thus, an acrylic pressure-sensitive adhesive solution was prepared.

### (Production of Antistatic-treated Film)

An antistatic agent solution was prepared by diluting 10 parts by weight of an antistatic agent (manufactured by Solvex Inc., MICROSOLVER RMd-142, containing tin oxide and a polyester resin as main components) with a mixed solvent formed of 30 parts by weight of water and 70 parts by weight of methanol. The resultant antistatic agent solution was applied onto a polyethylene terephthalate (PET) film (thickness: 38 µm) with a Meyer bar, and was dried at 130°C for 1 minute so that the solvent was removed. An antistatic layer (thickness: 0.2 µm) was formed as described above. Thus, an antistatic-treated film was produced.

### (Production of Protective Film with Separator)

The acrylic pressure-sensitive adhesive solution was applied to the surface of the antistatic-treated film opposite to the antistatic-treated surface, and was heated at 130°C for 2 minutes to form a pressure-sensitive adhesive layer having a thickness of 15 µm. Next, one surface of a polyethylene terephthalate film (thickness: 25 µm) was subjected to a silicone treatment, and the silicone-treated surface was bonded to the surface of the pressure-sensitive adhesive layer. Thus, a protective film (5) with a separator was produced.

### (Production of Heat-shielding Heat Insulating Substrate (5))

A heat-shielding heat insulating substrate (5) was obtained in the same manner as in Example 1 except that the protective film (5) with a separator was used instead of the protective film (1) with a separator.

The results are shown in Table 1.

### [Example 6]

### (Preparation of Acrylic Polymer)

100 Parts by weight of 2-ethylhexyl acrylate (2EHA, manufactured by Toagosei Co., Ltd.), 4 parts by weight of 2-hydroxyethyl acrylate (HEA, manufactured by Toagosei Co., Ltd., ACRYCS HEA), 0.2 part by weight of 2,2'-azobisisobutyronitrile (manufactured by Wako Pure Chemical Industries, Ltd., AIBN) serving as a polymerization initiator, and 205 parts by weight of ethyl acetate (manufacturedby Showa Denko K. K., ETHYL ACETATE) were loaded into a four-necked flask including a stirring blade, a temperature gauge, a nitrogen gas-introducing tube, and a condenser. While the mixture was gently stirred, a nitrogen gas was introduced into the flask. A polymerization reaction was performed for about 4 hours while the temperature of the liquid in the flask was kept at around 63°C. Thus, an acrylic polymer solution (about 35 wt%) was prepared. The acrylic polymer had a weight-average molecular weight (Mw) of 650,000 and a Tg of -68.3°C.

### (Preparation of Acrylic Pressure-sensitive Adhesive Composition)

The acrylic polymer solution (about 35 wt%) was diluted with ethyl acetate to 29 wt%, and 4 parts by weight of an isocyanurate of hexamethylene diisocyanate (manufactured by Nippon Polyurethane Industry Co., Ltd., CORONATE HX), 0.015 part by weight of dioctyltin laurate (manufactured by Tokyo Fine Chemical Co., Ltd., EMBILIZER OL-1) serving as a tin-based catalyst, and 3 parts by weight of acetylacetone serving as a cross-linking retarder were added to 100 parts by weight (solid content) of the acrylic polymer of the solution. The materials were mixed and stirred for about 1 minute while their temperature was kept at around 25°C. Thus, an acrylic pressure-sensitive adhesive composition was prepared. Aprotective film (6) with a separator was obtained in the same manner as in Example 1 except that the acrylic pressure-sensitive adhesive composition was used instead of the pressure-sensitive adhesive composition (1).

A heat-shielding heat insulating substrate (6) was obtained in the same manner as in Example 1 except that the protective film (6) with a separator was used instead of the protective film (1) with a separator.

The results are shown in Table 1.

### [Example 7]

A protective film (7) with a separator was obtained in the same manner as in Example 6 except that 4 parts by weight of CORONATE L manufactured by Nippon Polyurethane Industry Co., Ltd. was added instead of the CORONATE HX.

A heat-shielding heat insulating substrate (7) was obtained in the same manner as in Example 1 except that the protective film (7) with a separator was used instead of the protective film (1) with a separator.

The results are shown in Table 1.

### [Example 8]

A protective film (8) with a separator was obtained in the same manner as in Example 6 except that 3.5 parts by weight of CORONATE L manufactured by Nippon Polyurethane Industry Co., Ltd. was added instead of the CORONATE HX.

A heat-shielding heat insulating substrate (8) was obtained in the same manner as in Example 1 except that the protective film (8) with a separator was used instead of the protective film (1) with a separator.

The results are shown in Table 1.

### [Example 9]

A heat-shielding heat insulating substrate (9) was obtained in the same manner as in Example 1 except that a polyethylene terephthalate film base material having a thickness of 50 µm (manufactured by Toray Industries, Inc., product name: "LUMIRROR U48", visible light transmittance: 93%) was used instead of the glass plate as the transparent substrate layer.

The results are shown in Table 1.

### [Example 10]

A heat-shielding heat insulating substrate (10) was obtained in the same manner as in Example 2 except that a polyethylene terephthalate film base material having a thickness of 50 µm (manufactured by Toray Industries, Inc., product name: "LUMIRROR U48", visible light transmittance: 93%) was used instead of the glass plate as the transparent substrate layer.

The results are shown in Table 1.

### [Example 11]

A heat-shielding heat insulating substrate (11) was obtained in the same manner as in Example 3 except that a polyethylene terephthalate film base material having a thickness of 50 µm (manufactured by Toray Industries, Inc., product name: "LUMIRROR U48", visible light transmittance: 93%) was used instead of the glass plate as the transparent substrate layer.

The results are shown in Table 1.

### [Example 12]

A heat-shielding heat insulating substrate (12) was obtained in the same manner as in Example 4 except that a polyethylene terephthalate film base material having a thickness of 50 µm (manufactured by Toray Industries, Inc., product name: "LUMIRROR U48", visible light transmittance: 93%) was used instead of the glass plate as the transparent substrate layer.

The results are shown in Table 1.

### [Example 13]

A heat-shielding heat insulating substrate (13) was obtained in the same manner as in Example 5 except that a polyethylene terephthalate film base material having a thickness of 50 µm (manufactured by Toray Industries, Inc., product name: "LUMIRROR U48", visible light transmittance: 93%) was used instead of the glass plate as the transparent substrate layer.

The results are shown in Table 1.

### [Example 14]

A heat-shielding heat insulating substrate (14) was obtained in the same manner as in Example 6 except that a polyethylene terephthalate film base material having a thickness of 50 µm (manufactured by Toray Industries, Inc., product name: "LUMIRROR U48", visible light transmittance: 93%) was used instead of the glass plate as the transparent substrate layer.

The results are shown in Table 1.

### [Example 15]

A heat-shielding heat insulating substrate (15) was obtained in the same manner as in Example 7 except that a polyethylene terephthalate film base material having a thickness of 50 µm (manufactured by Toray Industries, Inc., product name: "LUMIRROR U48", visible light transmittance: 93%) was used instead of the glass plate as the transparent substrate layer.

The results are shown in Table 1.

### [Example 16]

A heat-shielding heat insulating substrate (16) was obtained in the same manner as in Example 8 except that a polyethylene terephthalate film base material having a thickness of 50 µm (manufactured by Toray Industries, Inc., product name: "LUMIRROR U48", visible light transmittance: 93%) was used instead of the glass plate as the transparent substrate layer.

The results are shown in Table 1.

### [Example 17]

A protective film (17) with a separator was obtained in the same manner as in Example 6 except that 0.80 part by weight of CORONATE L manufactured by Nippon Polyurethane Industry Co., Ltd. was added instead of the CORONATE HX.

A heat-shielding heat insulating substrate (17) was obtained in the same manner as in Example 1 except that the protective film (17) with a separator was used instead of the protective film (1) with a separator.

The results are shown in Table 1.

### [Example 18]

A heat-shielding heat insulating substrate (18) was obtained in the same manner as in Example 17 except that a polyethylene terephthalate film base material having a thickness of 50 µm (manufactured by Toray Industries, Inc., product name: "LUMIRROR U48", visible light transmittance: 93%) was used instead of the glass plate as the transparent substrate layer.

The results are shown in Table 1.

### [Comparative Example 1]

A protective film (C1) with a separator was obtained in the same manner as in Example 6 except that 0.25 part by weight of CORONATE L manufactured by Nippon Polyurethane Industry Co., Ltd. was added instead of the CORONATE HX.

A heat-shielding heat insulating substrate (C1) was obtained in the same manner as in Example 1 except that the protective film (C1) with a separator was used instead of the protective film (1) with a separator.

The results are shown in Table 1.

### [Comparative Example 2]

A heat-shielding heat insulating substrate (C2) was obtained in the same manner as in Comparative Example 1 except that a polyethylene terephthalate film base material having a thickness of 50 µm (manufactured by Toray Industries, Inc., product name: "LUMIRROR U48", visible light transmittance: 93%) was used instead of the glass plate as the transparent substrate layer.

The results are shown in Table 1.

**Table 1**

| | Transparent substrate layer | SW scratch resistance test (protective film surface) | 180° peel strength before warming (N/50 mm) | Test for cotton scratch resistance before warming (surface protective layer surface) | 180° peel strength after warming at 50±1°C× 20 days (N/50 mm) | 180° peel strength after warming at 80±1°C× 10 days (N/50 mm) | Test for cotton scratch resistance after warming at 80±1°C× 10 days (surface protective layer surface) | Initial water contact angle (γ degrees) | Water contact angle before warming (β degrees) | Water contact angle before warming (β' degrees) | Water contact angle after warming at 50±1°C×20 days (α degrees) | Water contact angle (β'-γ) | Water contact angle (α-β) | Test for cotton scratch resistance after warming at 50±1°C× 20 days (surface protective layer surface) |
|---|---|---|---|---|---|---|---|---|---|---|---|---|---|---|
| Example 1 | Glass | ○ | 0.040 | ⊚ | 0.092 | 0.103 | ⊚ | 105 | 100 | 100 | 99 | -5 | -1 | ⊚ |
| Example 2 | Glass | ○ | 0.049 | ⊚ | 0.107 | 0.126 | ⊚ | 105 | 103 | 103 | 103 | -2 | 0 | ⊚ |
| Example 3 | Glass | ○ | 0.037 | ⊚ | 0.069 | 0.095 | ⊚ | 105 | 105 | 105 | 107 | 0 | 2 | ○ |
| Example 4 | Glass | ○ | 0.051 | ⊚ | 0.089 | 0.112 | ⊚ | 105 | 107 | 107 | 117 | 2 | 10 | × |
| Example 5 | Glass | ○ | 0.054 | ⊚ | 0.130 | 0.131 | ⊚ | 105 | 96 | 96 | 105 | -9 | 9 | Δ |
| Example 6 | Glass | ○ | 0.062 | ⊚ | 0.147 | 0.159 | ⊚ | 105 | 109 | 109 | 107 | 4 | -2 | × |
| Example 7 | Glass | ○ | 0.124 | ⊚ | 0.291 | 0.320 | ⊚ | 105 | 109 | 109 | 107 | 4 | -2 | × |
| Example 8 | Glass | ○ | 0.150 | ⊚ | 0.349 | 0.373 | ⊚ | 105 | 109 | 109 | 107 | 4 | -2 | × |
| Example 9 | PET film | ○ | 0.039 | ⊚ | 0.091 | 0.101 | ⊚ | 105 | 100 | 100 | 99 | -5 | -1 | ⊚ |
| Example 10 | PET film | ○ | 0.047 | ⊚ | 0.107 | 0.124 | ⊚ | 105 | 103 | 103 | 103 | -2 | 0 | ⊚ |
| Example 11 | PET film | ○ | 0.036 | ⊚ | 0.067 | 0.095 | ⊚ | 105 | 105 | 105 | 107 | 0 | 2 | ○ |
| Example 12 | PET film | ○ | 0.048 | ⊚ | 0.089 | 0.112 | ⊚ | 105 | 107 | 107 | 117 | 2 | 10 | × |
| Example 13 | PET film | ○ | 0.053 | ⊚ | 0.128 | 0.130 | ⊚ | 105 | 96 | 96 | 105 | -9 | 9 | Δ |
| Example 14 | PET film | ○ | 0.062 | ⊚ | 0.146 | 0.156 | ○ | 105 | 109 | 109 | 107 | 4 | -2 | × |
| Example 15 | PET film | ○ | 0.123 | ⊚ | 0.290 | 0.310 | ○ | 105 | 109 | 109 | 107 | 4 | -2 | × |
| Example 16 | PET film | ○ | 0.148 | ○ | 0.348 | 0.372 | ○ | 105 | 109 | 109 | 107 | 4 | -2 | × |
| Example 17 | Glass | ○ | 0.388 | ○ | 0.930 | 0.994 | Δ | 105 | 109 | 109 | 107 | 4 | -2 | × |
| Example 18 | PET film | ○ | 0.387 | ○ | 0.927 | 0.990 | Δ | 105 | 109 | 109 | 107 | 4 | -2 | × |
| Comparative Example 1 | Glass | ○ | 0.483 | × | 1.133 | 1.213 | × | 105 | 109 | 109 | 107 | 4 | -2 | × |
| Comparative Example 2 | PET film | ○ | 0.480 | × | 1.131 | 1.212 | × | 105 | 109 | 109 | 107 | 4 | -2 | × |

### Industrial Applicability

The heat-shielding heat insulating substrate of the present invention may be utilized in, for example, a window of a building, a vehicle, or the like, a transparent case configured to store a plant or the like, or a freezing or refrigerating showcase.

### Reference Signs List

- **10**: transparent substrate layer
- **20**: infrared reflection layer
- **21**: metal layer
- **22a**: first metal oxide layer
- **22b**: second metal oxide layer
- **40**: protective topcoat layer
- **60**: undercoat layer
- **70**: protective film
- **80**: adhesive layer
- **90**: heating appliance
- **100**: heat-shielding heat insulating substrate
- **1000**: window

## Claims

1. A heat-shielding heat insulating substrate including a transparent substrate layer and an infrared reflection layer,
the heat-shielding heat insulating substrate comprising:
a protective topcoat layer arranged on a side of the infrared reflection layer opposite to the transparent substrate layer; and
a protective film arranged on a surface of the protective topcoat layer opposite to the infrared reflection layer,
wherein a 180° peel strength of the protective film to the protective topcoat layer under an environment having a temperature of 23±1°C and a humidity of 50±5%RH is from 0.01 N/50 mm to 0.40 N/50 mm, and
wherein a 180° peel strength of the protective film to the protective topcoat layer after storage of the heat-shielding heat insulating substrate under an environment having a temperature of 80±1°C for 10 days is from 0.01 N/50 mm to 1.0 N/50 mm.

2. The heat-shielding heat insulating substrate according to claim 1, wherein the transparent substrate layer is a transparent film, and the 180° peel strength of the protective film to the protective topcoat layer under the environment having a temperature of 23±1°C and a humidity of 50±5%RH is from 0.01 N/50 mm to 0.14 N/50 mm.

3. The heat-shielding heat insulating substrate according to claim 2, wherein the transparent substrate layer is a transparent film, and the 180° peel strength of the protective film to the protective topcoat layer under the environment having a temperature of 23±1°C and a humidity of 50±5%RH is from 0.03 N/50 mm to 0.10 N/50 mm.

4. The heat-shielding heat insulating substrate according to any one of claims 1 to 3, wherein the transparent substrate layer is a transparent film, and the 180° peel strength of the protective film to the protective topcoat layer after the storage under the environment having a temperature of 80±1°C for 10 days is from 0.01 N/50 mm to 0.30 N/50 mm.

5. The heat-shielding heat insulating substrate according to claim 4, wherein the transparent substrate layer is a transparent film, and the 180° peel strength of the protective film to the protective topcoat layer after the storage under the environment having a temperature of 80±1°C for 10 days is from 0.08 N/50 mm to 0.16 N/50 mm.

6. The heat-shielding heat insulating substrate according to any one of claims 1 to 5, wherein, when a water contact angle of the surface of the protective topcoat layer after peeling of the protective film from the surface of the protective topcoat layer after storage of the heat-shielding heat insulating substrate under an environment having a temperature of 50±1°C for 20 days is represented by α degrees, and a water contact angle of the surface of the protective topcoat layer after peeling of the protective film from the surface of the protective topcoat layer under the environment having a temperature of 23±1°C and a humidity of 50±5%RH before the storage is represented by β degrees, (α-β) is from -15 to +9.

7. The heat-shielding heat insulating substrate according to claim 6, wherein the (α-β) is from -1 to +9.

8. The heat-shielding heat insulating substrate according to any one of claims 1 to 7, wherein, when a water contact angle of a surface of a protective topcoat layer of a standard substrate under the environment having a temperature of 23±1°C and a humidity of 50±5%RH is represented by γ degrees, and a water contact angle of the surface of the protective topcoat layer of the standard substrate under an environment having a humidity of 50±5%RH when the protective film is bonded to the standard substrate at room temperature, and the resultant is left to stand at room temperature for 24 hours, followed by peeling of the protective film from the surface of the protective topcoat layer is represented by β' degrees, (β'-γ) is from -15 to +3.

9. The heat-shielding heat insulating substrate according to claim 8, wherein the (β'-γ) is from -9 to +1.

10. The heat-shielding heat insulating substrate according to any one of claims 1 to 9, wherein the protective film includes a base material film and a pressure-sensitive adhesive layer.

11. The heat-shielding heat insulating substrate according to claim 10, wherein a pressure-sensitive adhesive forming the pressure-sensitive adhesive layer is formed of a pressure-sensitive adhesive composition, and the pressure-sensitive adhesive composition contains a base polymer.

12. The heat-shielding heat insulating substrate according to claim 11, wherein the base polymer is at least one kind selected from a urethane-based resin, an acrylic resin, a rubber-based resin, and a silicone-based resin.

13. The heat-shielding heat insulating substrate according to claim 12, wherein the urethane-based resin is a urethane-based resin formed of a composition containing a polyol (A) and a polyfunctional isocyanate compound (B).

14. The heat-shielding heat insulating substrate according to claim 12, wherein the urethane-based resin is a urethane-based resin formed of a composition containing a urethane prepolymer (C) and a polyfunctional isocyanate compound (B).

15. The heat-shielding heat insulating substrate according to any one of claims 1 to 14, wherein the protective topcoat layer has a thickness of from 5 nm to 500 nm.

16. The heat-shielding heat insulating substrate according to any one of claims 1 to 15, wherein the protective film has a thickness of from 10 µm to 150 µm.
